# EUROPEAN PATENT APPLICATION

(11) **EP 1 020 756 A1**
(43) Date of publication of application: **19.07.2000**
(21) Application number: 98944311.4
(22) Date of filing: 29.09.1998
(51) Int. Cl.: G02F 1/1337

(54) **LIQUID CRYSTAL ALIGNMENT FILM AND METHOD OF PRODUCING THE SAME, AND LIQUID CRYSTAL DISPLAY USING THE SAME AND METHOD OF PRODUCING THE SAME**

(30) Priority: 01.10.1997 JP 26901297; 03.03.1998 JP 5059898
(71) Applicant: Matsushita Electric Industrial Co., Ltd., Kadoma-shi, Osaka-fu, 571-8501 (JP)
(72) Inventor: OGAWA, Kazufumi, Nara-shi, Nara 630-8101 (JP); HATTORI, Katsuji, Takarazuka-shi, Hyogo 665-0002 (JP); ISHIHARA, Shoichi, Katano-shi, Osaka 576-0034 (JP)
(74) Representative: Dempster, Benjamin John Naftel
(86) International application number: JP9804387
(87) International publication number: WO9917153

(57) **Abstract**

The purpose is to provide a liquid crystal alignment layer of a multidomain alignment type, winch is excellent in an alignment control characteristic and durability, and to provide a multidomain type liquid crystal display device, which has a high image quality a high contrast a wide viewing angle and an excellent response, by using this liquid crystal alignment layer. This purpose can be actualized by a liquid crystal alignment layer manufactured in the following method: using a chemical adsorbate comprising a photosensitive group, a silicon, and a linear carbon chain or a linear siloxane combined chain; forming a thin film in a monolayer by chemisorbing the chemical adsorbate on a surface of a substrate with a display electrode; additionally, inclining an adsorbed molecule composing the thin film in a particular direction; later, crosslinking the adsorbed molecule to each other at its photosensitive group part by irradiating a patterned polarized light; and making an inclination and/or an alignment direction of a major axis of a molecule composing the thin film to the substrate plane differ in each of a plurality of divided sections into which a pixel is divided.

## Description

### TECHNICAL FIELD

The present invention relates to a liquid crystal alignment layer, a liquid crystal display device utilizing the same, and a manufacturing method of them. For further details, the present invention relates to a liquid crystal alignment layer used for a plane display panel employing a liquid crystal for displaying a television (TV) image, a computer image and the like; and a manufacturing method thereof as well as a liquid crystal display device utilizing the same and a manufacturing method thereof.

### BACKGROUND ART

In recent years, the utilization of a liquid crystal display device capable of color display has expanded rapidly, and this device has a structure wherein a pair of substrates with a transparent electrode arrayed in a matrix and a liquid crystal alignment layer formed on the transparent electrode is opposed through the liquid crystal alignment layers with a certain gap, and a liquid crystal is sealed between the gap.

More specifically, a macromolecular film is formed on each surface of a first glass substrate with a pixel electrode and a thin-film transistor (TFT) array and a second glass substrate with a plurality of red, blue and green color filters and a common transparent electrode on the color filters, and a alignment of the liquid crystal is provided by rubbing the coated surfaces. Secondly, the first glass substrate and the second glass substrate are opposed through the coated surfaces (the liquid crystal alignment layers) with a spacer interposed, and an empty cell (a panel structure) is made by adhesion of a periphery of the substrates. A display element is constituted by sealing with a injection of such a liquid crystal as twisted nematic (TN) into the empty cell, and additionally, a liquid crystal display device as a optical display device is constituted by disposing polarizers on the front and back sides of the element as well as a backlight outside the first glass substrate.

A liquid crystal display device having such a structure applies a voltage between the electrodes to obtain an ON/OFF state with the TFT, and controls a light transmission by changing an alignment state of the liquid crystal, and displays an arbitrary image. Accordingly, the liquid crystal alignment layers for controlling the alignment state of the liquid crystal on a path of the light transmission play a extremely important role of affecting a display performance.

Macromolecular materials such as polyimide, polyamic acid (its precursor) and polyvinyl alcohol have conventionally been used widely as a liquid crystal alignment layer. The following method is used for manufacturing the liquid crystal alignment layer a method of rubbing the coated surface with a felt cloth after forming a film while applying a solution, wherein polyimide is dissolved in an organic solvent, on a surface of a substrate by a rotational-coating method.

However, according to this method, application unevenness and rubbing unevenness are caused by irregularities and differences in level on a surface of a substrate. In the case of a panel with a large area (for instance, 14-inch display), application unevenness and rubbing unevenness are caused further. Another problem is that TFT is damaged by static electricity generated while rubbing and display unevenness is caused by dust in rubbing.

A troublesome process of alternating between masking and rubbing must be executed a plurality of times for manufacturing a multidomain type liquid crystal display device by a rubbing method. According to this method of repeating the rubbing, even more serious problem is that TFT is damaged and dust comes out as described above as well as the manufacturing efficiency of a liquid crystal panel deteriorates largely due to a complicated process.

### DISCLOSURE OF THE INVENTION

A series of the present invention described below has been intended in response to the above-mentioned problems. The purposes of a series of the present invention are: first, to provide a liquid crystal alignment layer comprising a thin film in nanometer order which can obtain a desirable alignment characteristic, which does not vary with an outer factor of heat, and is excellent in an alignment control force over a liquid crystal molecule and does not hinder light transmission and electric field in a liquid crystal cell; secondly, to provide a multidomain type liquid crystal display device having a wide viewing angle and a high-speed display response by using the above-mentioned liquid crystal alignment layer lastly, to provide a method of manufacturing the above-mentioned liquid crystal alignment layer and liquid crystal display device with a high productivity.

Although a series of the present invention has been devised through a series of research and development which is closely relevant, each of a series of the present invention is described in different embodiments. Therefore, after a series of the present invention is divided into the first and second invention groups, each group will be detailed below.

### [DISCLOSURE OF THE FIRST INVENTION GROUP]

The first invention group is constituted as described below.
(1) A liquid crystal alignment layer comprising a thin film in a monolayer on a surface of a substrate with an electrode; wherein an end of a molecule composing the thin film is bonded and fixed on the surface of a substrate, and the above-mentioned molecule is crosslinked to each other in a state in which an inclination and/or an alignment directive of a major axis of the molecule to the substrate are different in each area.
   A thin film in a monolayer on a substrate has a structure wherein a molecule composing the thin film (adsorbate molecule) is arrayed along a substrate plane, with an end of the molecule bonded to the substrate plane (adsorbent) and the other end aligned in a directive opposite to the substrate plane. Accordingly, each molecule composing the thin film has a certain gap therebetween, and a liquid crystal molecule can enter the gap. Then, the liquid crystal molecule enters the gap with an alignment adapted to a shape of the above-mentioned gap. That is, since the liquid crystal molecule enters the gap with an inclination (pretilt angle) and a direction (pretilt direction) agreeing with a inclination ad a direction of an adsorbate molecule composing the thin film to the substrate, an alignment (pretilt angle and pretilt direction) of the liquid crystal molecule can be controlled by controlling an inclination and a direction of a major axis of the adsorbate molecule (the molecule composing the thin film).
   However, an alignment state of the adsorbate molecule merely with its end fixed is unstable and varies easily with heat, external force and the like. Consequently, an alignment control over the liquid crystal molecule is unstable in the thin film in a monolayer merely with an end of the molecule fixed. A liquid crystal alignment layer having the above-mentioned constitution has a structure wherein an end of a molecule composing the alignment layer is fixed on a substrate, and the molecule is crosslinked to each other at a particular position of a major axis of the molecule. That is, since an alignment state of the molecule is stabilized in terms of three-dimensional structure, an alignment of a liquid crystal molecule can be controlled stably. Moreover, since the liquid crystal alignment layer having the above-mentioned constitution comprises a thin film in a monolayer each molecule composing the alignment layer can be involved in the alignment of a liquid crystal molecule. Therefore, an alignment control force over the liquid crystal molecule is intense.
   In the above-mentioned constitution, an inclination and/or an alignment direction of a major axis of a molecule composing the thin film are made different in each area of the thin film. Accordingly, a pretilt angle and a prelilt direction of the liquid crystal molecule can be controlled in each area of the alignment layer, and thereby a liquid crystal alignment layer of a multidomain alignment type is actualized.
   In addition to the above, the liquid crystal alignment layer having the above-mentioned constitution is extremely thin (in nanometer order) because of comprising a thin film in a monolayer, and is low in insulation because of not being a macromolecular film. Therefore, the thickness of cell is never increased due to the formation of the alignment layer, and the alignment layer has such an extremely appropriate characteristic tat a light transmission and an electric field for driving a liquid crystal are scarcely hindered. The above-mentioned pretilt angle is an angle of a major axis of a liquid crystal molecule with a substrate plane, and the pretilt direction is a direction of a major axis of a liquid crystal molecule on a substrate plane.
   As compared with such a liquid crystal alignment layer in the present invention, a conventional liquid crystal alignment layer (such as a polymer film made of the above-mentioned polyimide), which is composed closely with a long main chain tangled up, has difficulty in obtaining a sufficient alignment control force since only a surface layer of the film can contribute to an alignment of a liquid crystal. Moreover, in a conventional alignment layer for which an alignment is provided by rubbing, the alignment is changed or deteriorated by an external stimulus such as heat and rubbing. Furthermore, since such a polymer film as polyimide has a thick coating and a high electrical resistance, the problem is that it is a hindrance factor to a light transmission and a liquid crystal driving. Accordingly, in the case of using such a polymer film as polyimide, such an effect is not obtained as the liquid crystal alignment layer having the above-mentioned constitution.
   Although the inventors of the present invention confirm that a pretilt angle and a pretilt direction of a liquid crystal molecule can be changed by changing an inclination and a direction of a major axis of a molecule composing a thin film, it has not been clarified in detail (such as, whether the inclination and the direction agree with the pretilt angle and the pretilt direction) that how an inclination and a direction of a major axis of a molecule composing a thin film are related to a pretilt angle and a pretilt direction of a liquid crystal molecule.
   A liquid crystal alignment layer described in the above-mentioned (1) can be constituted below.
   That is, the above-mentioned each area can be made a plurality of patterned areas into which a section corresponding to a pixel is divided. According to this constitution, it is possible to provide a liquid crystal alignment layer for actualizing a multidomain (including a dual domain, and so forth).
   The above-mentioned thin film can be formed by chemisorbing a chemical adsorbate comprising a photosensitive group, a silicon, and a linear carbon chain or a linear siloxane combined chain on a surface of a substrate; and crosslinking a chemical adsorbate molecule to each other at the photosensitive group part. A chemical adsorbate comprising a photosensitive group, a silicon, and a linear carbon chain or a linear siloxane combined chain can be bonded to a substrate plane through the silicon, and the chemisorbed molecule can be crosslinked to each other at the photosensitive group part, and the linear carbon chain or the linear siloxane combined chain functions so as to determine a length of a major axis, thereby, which is convenient in terms of chemical adsorption on a substrate and the provision of alignment.
   The above-mentioned molecule composing a thin film can be made to have a silicon at its end. A thin film comprising a group of molecules, which are bonded to a substrate plane through a silicon at its end, is detached with difficulty because of being bonded firmly to the substrate, and thereby is preferable in terms of an excellence in durability.
   The above-mentioned molecule composing a thin film can comprise a plurality of kinds of molecules with a different length of a major axis of the molecule, and the thin film can be formed by bonding the plurality of kinds of molecules with a mixture of them to a surface of a substrate. In a thin film, which is formed by aligning a plurality of kinds of molecules with a different length of a major axis of the molecule with a mixture of them along a substrate plane, a molecule with a short major axis and a molecule with a long major axis are combined. Consequently, an alignment state of a molecule is stabilized in terms of three-dimensional structure. When a mixture ratio of a molecule with a short major axis to a molecule with a long major axis changes, an alignment state of a molecule changes. Therefore, an alignment layer having a desirable alignment characteristic can be formed.
   The above-mentioned plurality of kinds of molecules can be made different in a length of a linear carbon chain or a linear siloxane combined chain in a structure of the molecule. A molecule having a linear chain is convenient for a molecule for controlling an alignment of a liquid crystal molecule, and is preferable since an alignment control characteristic over a liquid crystal molecule can be changed by changing a length of a linear chain.
(2) A liquid crystal alignment layer described in the above-mentioned (1) can be manufactured by a manufacturing method comprising the steps of forming a thin film in a monolayer by contacting a chemisorption solution including a silane-based chemical adsorbate, comprising a photosensitive group and a linear carbon chain or a linear siloxane combined chain, and a nonaqueous organic solvent on a substrate plane with an electrode, and chemisorbing a chemical adsorbate molecule in the chemisorption solution on the substrate plane; and providing an alignment comprising the steps of aligning a molecule composing the thin film in a certain direction provisionally by drain-drying the washing solution while setting up the substrate in a certain direction after washing the above-mentioned thin film in a monolayer with a washing solution comprising a nonaqueous organic solvent, and crosslinking the molecule composing the thin film to each other in a particular direction by irradiating a patterned polarized light having a different polarized direction on the provisionally aligned thin film plane.
   Each factor in the above-mentioned constitution functions as described below. When a chemisorption solution including a silane-based chemical adsorbate and a nonaqueous organic solvent is contacted on an electrode plane, a molecule of the silane-based chemical adsorbate (chemical adsorbate molecule) is chemisorbed to a hydrophilic group like a hydroxyl group on the electrode plane, and consequently a thin film in a monolayer is formed. When this thin film is washed with a washing solution comprising a nonaqueous organic solvent, it is possible to remove a molecule which does not react and to form a thin film in a monolayer of good quality having many gaps which a liquid crystal molecule can enter. The washing functions as a previous treatment for the following provisional alignment.
   Next, in drain-drying while setting up a substrate with the thin film including the washing solution in a certain direction, the drying goes on from the top of a wet surface of the thin film to the bottom (that is, in a direction of gravitation), and then a molecule composing the thin film is aligned provisionally in a direction of drying. Subsequently, when a polarized light is irradiated in a state of the provisional alignment, the molecule composing the thin film is crosslinked easily to each other in a certain direction as compared with no alignment. Accordingly, a group of the molecules composing the thin film can be crosslinked efficiently by the following irradiation of a patterned polarized light, and thereby an alignment layer having a plurality of patterned areas for crosslinking can be manufactured with a high productivity.
   Through the above, according to a manufacturing method having the above-mentioned constitution, an alignment layer having a plurality of areas, in which an inclination and a direction of a molecule composing a thin film to a substrate are different, is obtained, and this alignment layer has such a characteristic that a pretilt angle and a pretilt direction are different in each of the above-mentioned plurality of areas.
   In a manufacturing method of the above-mentioned (2), the above-mentioned step of crosslinking can be made the stop of changing an inclination and/or an alignment direction of a molecule composing a thin film to a substrate plane in each of a plurality of patterned divided areas, into which a section corresponding to a pixel is divided, by irradiating a polarized light two or more times, with a different polarized direction and a different irradiation area in each irradiation, on a provisionally aligned thin film plane in the above-mentioned step of aligning provisionally.
   According to this step, it is possible to manufacture a liquid crystal alignment layer of a multidomain alignment type even more certainly, wherein an inclination and/or an alignment direction of a molecule composing a thin film to a substrate plane are changed in each of a plurality of patterned divided areas into which a section corresponding to a pixel is divided.
   In a manufacturing method of the above-mentioned (2), the above-mentioned step of providing an alignment can be made the step of repeating two or more times a series of steps comprising the first alignment step of aligning a molecule composing the thin film in a certain direction provisionally by drain-drying the washing solution while setting up a substrate in a certain direction after washing a thin film in a monolayer with a washing solution comprising a nonaqueous organic solvent and the second alignment step of irradiating a polarized light having a polarized direction approximately parallel with a provisional alignment direction in the above-mentioned first alignment step; and the step of changing an inclination and/or an alignment direction of a major axis of the molecule composing the thin film to the substrate plane in each of a plurality of patterned divided areas, into which a section corresponding to a pixel is divided, by making a drain-drying direction at the N-th time (N is an integer of 2 or more) differ from a drain-drying direction at the first time through the [N ― 1]-th time as well as making an irradiation area on the substrate in an irradiation of a polarized light at the N-th time corresponding to the drain-drying differ from an irradiation area at the first time through the [N ― 1]-th time.
   Although the first alignment step in this constitution is substantially the same as the step of aligning provisionally described in the above-mentioned (2), this constitution has a characteristic of repeating the first alignment step and the second alignment stop of irradiating a polarized light having approximately the same polarized direction as a provisional alignment direction on a provisionally aligned thin film in the first alignment step. The technical significance of this constitution is as follows.
   As described above, when a polarized light is irradiated after aligning provisionally, a molecule is crosslinked easily to each other in a particular direction. In the above-mentioned constitution, since a polarized light having a polarized direction approximately parallel with a provisional alignment direction is irradiated, the molecule can be crosslinked to each other along the polarized direction even more efficiently and certainly. When the molecule is crosslinked to each other, an alignment state is stabilized in terms of three-dimensional structure, and subsequently, even if a drain-drying is executed again, the alignment state does not change. A manufacturing method according to the above-mentioned constitution of repeating the first alignment step and the second alignment step utilizes such a property. That is, an area which is crosslinked by irradiating a polarized light is never aligned provisionally again by another drain-drying treatment, while an area except the area on a thin film is aligned provisionally in a direction of another drain-drying after a provisional alignment by the first drain-drying is dissolved by another drain-drying treatment. Therefore, a liquid crystal alignment layer with an excellent multidomain characteristic can be formed by repeating the operation of fixing an alignment by a provisional alignment and an irradiation of a polarized light. Specifically, it is possible to obtain a liquid crystal alignment layer with an excellent multidomain characteristic, wherein different pretilt angle and/or pretilt direction can be provided in each divided pixel.
   The value of N in the above-mentioned constitution is not limited particularly, and it is satisfactory to determine the value of N at 2 to 4 inclusive in terms of improving a viewing angle characteristic. To provide different pretilt angle and/or pretilt direction in each divided pixel means, in explaining the case of dividing a pixel into two parts as an example, that a pretilt angle in one divided pixel is determined at 0.8° and a pretilt angle in the other divided pixel is determined at 4° , or a pretilt direction in each divided pixel is made reverse for the boundary plane between both divided pixels.
   A mixture of two or more kinds of silane-based compounds with a different length of a major axis of a molecule can be used as the above-mentioned two or more kinds of silane-based compounds. An inclination of a molecule with the longest major axis to a substrate is controlled by changing a mixture ratio of the above-mentioned two or more kinds of silane-based compounds, and thereby desirable pretilt angle and/or pretilt direction can be provided for a liquid crystal alignment layer. An inclination of a molecule with the longest major axis to a substrate is controlled by changing a length of a molecule with a short major axis in comparison with each other without changing a mixture ratio of the above-mentioned two or more kinds of silane-based compounds, and thereby desirable pretilt angle and/or pretilt direction can be provided for a liquid crystal alignment layer. Furthermore, a mixture of two or more kinds of the above-mentioned compounds, wherein a length of a molecule is made different by changing a length of one or more chain among a group consisting of a linear carbon chain and a linear siloxane combined chain, can be used as the above-mentioned silane-based chemical adsorbate. In addition, an inclination of a molecule with the longest major axis to a substrate is controlled by changing a mixture ratio of two or more kinds of the above-mentioned compounds and/or controlling a length of a molecule of each compound, and thereby a desirable liquid crystal alignment characteristic can be provided for a liquid crystal alignment layer.
   In the above, since a molecule with a short major axis and a molecule with a long major axis in comparison with each other are a conception which is determined by a relative relation, the length is not limited particularly. Generally, a molecule with a carbon number of 1 to 18 inclusive is used as a molecule with a short major axis, while a molecule with a carbon number of 14 to 18 inclusive is used as a molecule with a long major axis. Since a preferable mixture ratio of a molecule with a long major axis to a molecule with a short major axis should be determined by a relation to each other, a limitation can not be provided in advance. Generally, the suitable mixture ratio of both is as follows: the number of a molecule with a long major axis to the number of a molecule with a short major axis is a range from 10 to 1 to 1 to 10. The reason is that this range provides a sufficient effect of mixture.
   It is preferable to use a nonaqueous organic solvent including no water as the above-mentioned washing solution. The reason is that if the washing solution is a solvent including water, water included in the solvent reacts with a chemical adsorbate, and an adsorbing power of the chemical adsorbate on a substrate declines, and a spot resulting from a product through the reaction occurs on an alignment layer. A solvent including at least one organic group among a group consisting of an alkyl group, a fluorocarbon group, a chlorocarbon group and a siloxane group can exemplify a preferable nonaqueous organic solvent because of an excellent dissolving power of a chemical adsorbate.
   It is preferable that a compound comprising a photosensitive group; one or more chain among a group consisting of a linear carbon chain and a linear siloxane combined chain; and one or more organic group among a group consisting of a chlorosilyl group, an alkoxysilyl group and an isocyanatosilyl group is used as the above-mentioned silane-based chemical adsorbate. The reason is that since this compound is excellent in reactivity with a substrate and a molecule can be crosslinked to each other by an irradiation of a polarized light, it is convenient for a chemical adsorbate composing a thin film. A cinnamoyl group, a chalcone group and a methacryl group can exemplify a photosensitive group in this compound.
   A compound comprising, at an end or a part of the above-mentioned linear carbon chain or linear siloxane combined chain, at least one organic group among a group consisting of a carbon trifluoride group (― CF₃), a methyl group (― CH₃), a vinyl group (―CH=CH₂), an allyl group (―CH=CH―), an acetylene group (triple bond: ―C≡C―), a phenyl group (―C₆H₅), an aryl group (―C₆H₄―), a halogen atom, a alkoxy group (―OR; R is an alkyl group), a cyano group (―CN), an amino group (―NH₂), a hydroxyl group (―OH), a carbonyl group (=CO), an ester group (―COO―) and a carboxyl group (―COOH) is preferable as the above-mentioned compound. The reason is that a desirable pretilt angle is obtained easily by using these compounds.
   In the above-mentioned manufacturing method, a step of forming a preparation layer comprising an SiOH group on a substrate plane can be added before the above-mentioned step of forming a thin film. Since an SiOH group functions as a hydrophilic group, a substrate with a preparation layer comprising an SiOH group is excellent in adsorbing a chemical adsorbate with a high density.
(3) A liquid crystal display device using a liquid crystal alignment layer described above can be constituted below.
   A liquid crystal display device comprising at least a pair of opposite substrates, a liquid crystal alignment layer on a surface of at least a substrate with a display electrode of the above-mentioned pair of substrates, and a liquid crystal accommodated in a cell gap between the above-mentioned pair of opposite substrates; wherein the above-mentioned liquid crystal alignment layer is a thin film in a monolayer which is formed by bonding a chemical adsorbate molecule to a surface of a substrate and crosslinking the chemical adsorbate molecule to each other, an inclination and/or an alignment direction of a major axis of the adsorbate molecule to the substrate plane are different in each of patterned divided pixels into which a pixel is divided, and a pretilt angle and/or a pretilt direction of a liquid crystal molecule accommodated in the above-mentioned cell gap are controlled by the above-mentioned inclination and/or alignment direction of a major axis of the adsorbate molecule to the substrate plane.
   In a liquid crystal display device having the above-mentioned constitution, the liquid crystal accommodated between the above-mentioned pair of apposite substrates can be a nematic liquid crystal, and the above-mentioned cell gap can be determined so that the liquid crystal molecule is aligned twistedly at an angle of 90° or 180° through 270°.
   The above-mentioned liquid crystal display device can be an in-plane switching type liquid crystal display device wherein a pair of display electrodes is formed on a substrate plane.
(4) A liquid crystal display device described in the above-mentioned (3) can be manufactured by a manufacturing method comprising at least the steps of forming a thin film in a monolayer by contacting a chemisorption solution including a silane-based chemical adsorbate, comprising a photosensitive group and a linear carbon chain or a linear siloxane combined chain, and a nonaqueous organic solvent on a substrate plane with a display electrode, and chemisorbing a chemical adsorbate molecule in the above-mentioned chemisorption solution at an end in a direction of a major axis of the molecule on the substrate plane; aligning a molecule composing the thin film in a certain direction provisionally by drain-drying the washing solution while setting up the substrate in a certain direction after washing the above-mentioned thin film in a monolayer with a washing solution comprising a nonaqueous organic solvent; providing an alignment by irradiating a patterned polarized light having a different polarized direction on the provisionally aligned thin film plane, crosslinking the chemical adsorbate molecule to each other, and forming a substrate with a liquid crystal alignment layer, in which an inclination and/or an alignment direction of a major axis of the molecule composing the thin film to the substrate plane are different; and forming a liquid crystal cell by disposing a liquid crystal between both substrates after opposing the above-mentioned substrate with a liquid crystal alignment layer and an opposite substrate with at least an opposite electrode, through a surface with an electrode, with a predetermined cell gap.
   In this manufacturing method, a nematic liquid crystal can be used as the above-mentioned liquid crystal disposed between both substrates, and the above-mentioned inclination and/or alignment direction of a major axis of the molecule composing the thin film to the substrate plane and the above-mentioned cell gap can be constructed so that a liquid crystal molecule is aligned twistedly at an angle of 90° or 180° through 270° . According to this manufacturing method, a multidomain type liquid crystal display device with a wide viewing angle can be manufactured with a high productivity, and additionally since an alignment characteristic of a liquid crystal alignment layer is deteriorated with difficulty, a liquid crystal display device which exhibits an excellent display performance over a long period can be manufactured.
   Next a summary of the present invention is described further, taking a method of manufacturing a multidomain type liquid crystal display device for example.
   A device as a mode of the present invention can be manufactured as described below. A chemisorption solution, in which a silane-based chemical adsorbate comprising a photosensitive group and a linear carbon chain or a linear siloxane combined chain is dissolved in a nonaqueous organic solvent, is contacted directly or after forming a layer of SiO₂ as a preparation layer on a first substrate with a group of first electrodes formed in a matrix and a TFT; and a chemical adsorbate molecule in the chemisorption solution is chemisorbed on a surface of the substrate. Thus, it is possible to form a thin film in a monolayer wherein an end of the chemical adsorbate molecule is bonded to the surface of the substrate. Then, the contact of the chemisorption solution is executed, preferably, in an atmosphere of a low humidity (for instance, a relative humidity of 35 % or less).
   Subsequently, a molecule which does not react is washed off by immersing the above-mentioned substrate with a thin film in a vessel filled with a nonaqueous organic solvent; and later, after pulling up the substrate out of the vessel, the substrate is drain-dried while setting up in a certain direction. Thus, it is possible to align a chemisorbed molecule composing the thin film provisionally in a drain-drying direction.
   Next, after putting a first patterned mask on a polarizer, a patterned polarized light, wherein a polarized direction is adjusted so as to be approximately parallel with a provisional alignment direction, is irradiated on the provisionally aligned thin film plane. Thus, it is possible to photopolymerize a photosensitive group of the molecule composing the thin film (chemisorbed molecule) selectively, and to form a patterned area in which the molecule composing the thin film (chemisorbed molecule) on the surface of the substrate is crosslinked to each other in a particular direction. An irradiation of the patterned polarized light is adjusted so that the patterned polarized light is irradiated on each area constituting a pattern of different pixels.
   Later, the substrate with a thin film which is crosslinked in the above is immersed again in the vessel, and at this time the substrate is pulled up out of the vessel in a different direction from the first time, and the substrate is drain-dried again while setting up in the direction, and the molecule composing the thin film is aligned provisionally again in the direction. A group of the molecules composing the thin film in a patterned area, which is crosslinked at the first time, are never aligned again since an alignment state is fixed by the crosslinking.
   Subsequently, after putting a second patterned mask different from the above-mentioned pattern on an area which is not irradiated yet at the first time, a patterned polarized light having a polarized direction parallel with the second provisional alignment direction is irradiated; and the molecule composing the thin film is crosslinked by photopolymerizing selectively like the first time. A plurality of patterned areas having a different alignment direction (an inclination and/or a direction of the molecule composing the thin film to the substrate) are formed on the thin film plane by repeating a similar operation as the need arises hereafter. Thus, the first substrate with a liquid crystal alignment layer according to the present invention is completed.
   Next, after opposing and adjusting the above-mentioned first substrate with a group of first electrodes and a second substrate with a group of second electrodes (with an alignment layer or without an alignment layer), which is prepared specially, through the electrode planes with a predetermined gap, a periphery of the substrates is stuck and fixed; and later, a liquid crystal cell is formed by injecting, for instance, a nematic liquid crystal between the first substrate and the second substrate. A multidomain type liquid crystal display device according to the present invention is manufactured by disposing a polarizer and a backlight to this liquid crystal cell under an ordinary means.
   A liquid crystal display device manufactured according to the above-mentioned manufacturing method has different pretilt angle and/or pretilt direction in each divided pixel, and such a characteristic is actualized by a means of changing an inclination and/or a direction of an adsorbate molecule composing a liquid crystal alignment layer (a molecule composing a thin film) to a substrate in each area. The means and mode of changing an inclination and/or a direction of a molecule composing a thin film to a substrate in each area is detailed in the above. Therefore, a description is omitted here. A direction of a molecule composing a thin film can be controlled by a drain-drying direction and a polarized direction, while an inclination of a molecule composing a thin film to a substrate can be controlled by using a mixture of a plurality of kinds of an adsorbate molecules with a different length of the molecule. Moreover, an inclination of a molecule composing a thin film to a substrate can be controlled to some extent by changing an angle of leaning in drain-drying.

### [BRIEF DESCRIPTION OF THE DRAWINGS OF THE FIRST INVENTION GROUP]

Fig. 1 is a view for describing the step of chemisorbing for manufacturing a thin film in a monolayer in Embodiment 1-1 of the present invention.
Fig. 2 is a view for describing the step of washing a thin film in Embodiment 1-1 of the present invention.
Fig. 3 is a conceptional view showing a provisional alignment state (after the first drain-diving) of a molecule composing a thin film in Embodiment 1-1 of the present invention.
Fig. 4 is a view for describing the step of irradiating a polarized light in Embodiment 1-1 of the present invention.
Fig. 5 is an enlarged conceptional view for describing the first irradiation of a polarized light on a molecular level in Embodiment 1-1 of the present invention.
Fig. 6 a a conceptional view for describing a state of a thin film after the second drain-drying on a molecular level in Embodiment 1-1 of the present invention.
Fig. 7 is a conceptional view for describing an alignment state of a thin film after the second irradiation of a polarized light on a molecular level in Embodiment 1-1 of the present invention.
Fig. 8 is a view for describing an alignment direction of a molecule composing a thin film after the second irradiation of a polarized light in Embodiment 1-1 of the present invention.
Fig. 9 is a view showing a state (before a reaction with humidity in an atmosphere) in which an inorganic silane-based chemical adsorbate molecule is chemisorbed on a substrate plane.
Fig. 10 is a view showing that the inorganic silane-based chemical adsorbate molecule shown in Fig. 9 changes into a compound rich in an OH group through a reaction with humidity.
Fig. 11 is a cross sectional model view for describing a manufacture of a liquid crystal display device according to the present invention.
Fig. 12 is a view showing a liquid crystal alignment direction of a multidomain pixel which is divided into four parts in Embodiment 1-6 of the present invention.

### [DETAILED DESCRIPTION OF THE PREFERRED EMBODIMENTS OF THE FIRST INVENTION GROUP]

The contents of the first invention group are described concretely, based on embodiments below.

### (Embodiment 1-1)

After preparing a glass substrate (including a multitude of hydroxyl groups) with a transparent electrode made of ITO (indium tin oxide) on its surface and washing and degreasing the substrate plane sufficiently, a film of SiO₂ with a thickness of 100 nm was formed by a method of sputtering so as to cover the electrode plane.

On the other hand, a compound represented by a chemical formula C₆H₅CH=CHCOC₆H₄O(CH₂)₆OSiCl₃ was prepared as a silane-based chemical adsorbate (or called surface active agent) comprising a photosensitive group, a linear carbon chain (such as hydrocarbon group) and a silicon, and a chemisorption solution was obtained by dissolving the compound in dehydrated hexadecane (nonaqueous organic solvent) at a density of approximately 1 wt.%.

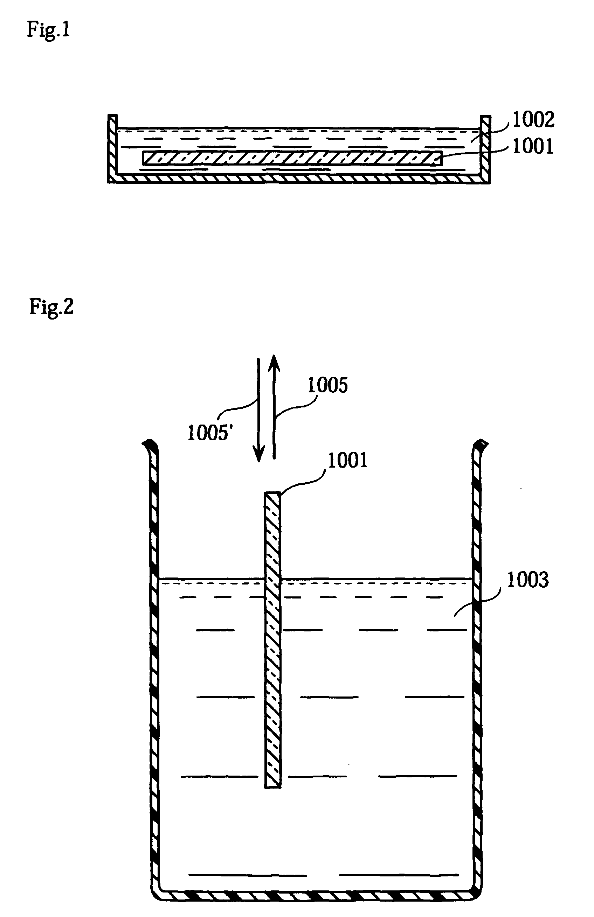

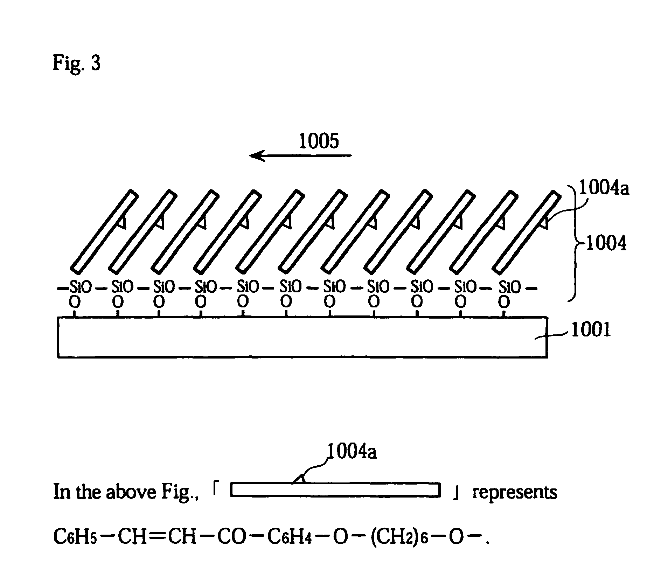

Next, as shown in Fig. 1, a vessel was filled with the above-mentioned chemisorption solution 1002, and the above-mentioned glass substrate 1001 was immersed in the above-mentioned vessel in a dry atmosphere (a relative humidity of 30 % or less) for approximately an hour. A method of applying may be used instead of immersing. Later, after taking the substrate 1001 out of the vessel and repeating a ten-minute wash by immersing with dehydrated n-hexane 3 (nonaqueous organic solvent) three times, the substrate was pulled up in a direction (1005) approximately parallel with gravitation while setting up and was drain-dried (Fig. 2), and additionally the substrate was left motionless in an atmosphere including humidity for a moment while keeping the substrate plane approximately parallel with gravitation. Since an OH group was substituted for an unreacted Cl group of an adsorbed molecule through this state, the chemisorption of the adsorbate molecule was deactivated. Thus, a thin film (a thickness of approximately 1.8 nm) in a monolayer comprising a chemical adsorbate molecule, which was aligned provisionally in a drain-drying direction, was formed (Fig. 3). In Fig. 3, 1004a indicates the photosensitive group part.

When the thin film (chemisorption monomolecular film 1004) in a monolayer manufactured in the above was examined with FTIR (Fourier transform infrared spectroscopy) and a liquid crystal test cell alignment method, it was confirmed that the adsorbate molecule composing the thin film was aligned in a drain-drying direction.

The thin film (chemisorption monomolecular film 1004) in a monolayer manufactured in the above was analyzed with FTIR (Fourier transform infrared spectroscopy), and consequently it was confirmed that a bond represented by the following Chemical Formula 1 was produced through a reaction of eliminating hydrochloric acid, which was caused between an SiCl group in a chlorosilane-based chemical adsorbate and a hydroxyl group on a surface of the substrate, and that a bond represented by the following Chemical Formula 2 was produced by reacting with humidity in an atmosphere.

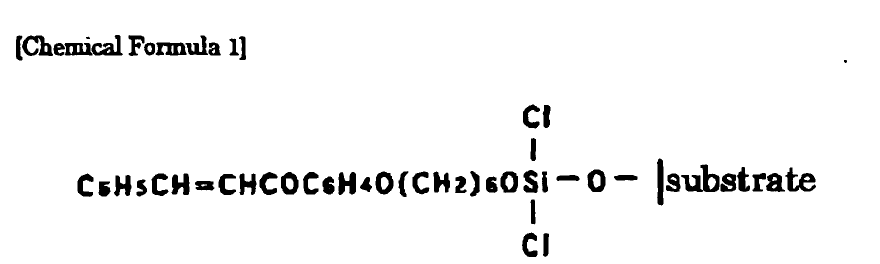

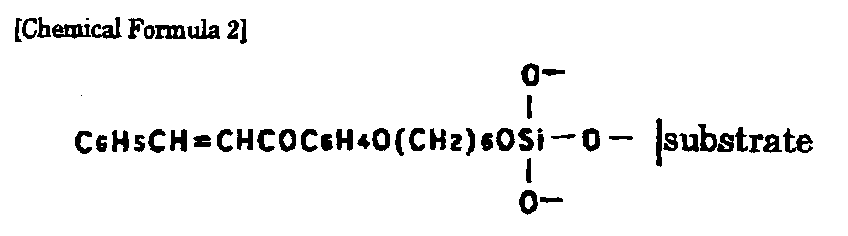

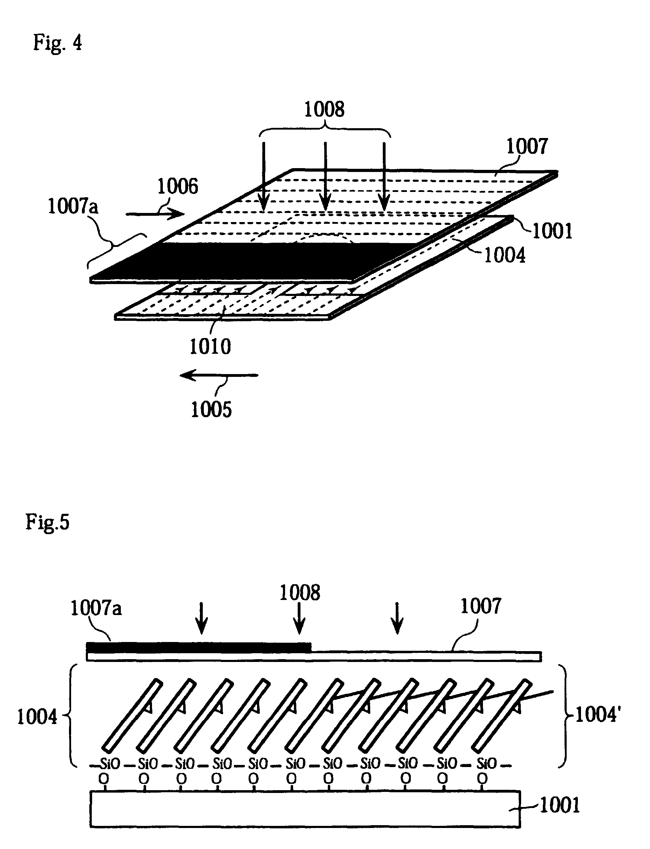

Next, after a photomask 1007, in which a mask 1007a for cutting off light partly is put on a polarizer (HNP'B made by POLAROID Corp.), was put so that a polarized direction 1006 was approximately parallel (such as at an angle of 3° , or completely parallel) with a pulling-up direction 1005, an ultraviolet ray 8 (UV light) with a wavelength of 365 nm was irradiated with 100mJ/cm² by using an extra-high-pressure mercury-vapor lamp (Fig. 4). In Fig. 4, 1010 indicates a transparent electrode.

When the thin film after irradiating the UV light was analyzed with FTIR, it was confirmed that the chemical adsorbate molecule was aligned in the polarized direction in an area on which the polarized UV light was irradiated, and that the adsorbate molecule was crosslinked to each other through a bond of carbon (refer to the following Chemical Formula 3) in a vinyl group of the chemical adsorbate molecule (refer to Fig. 5).

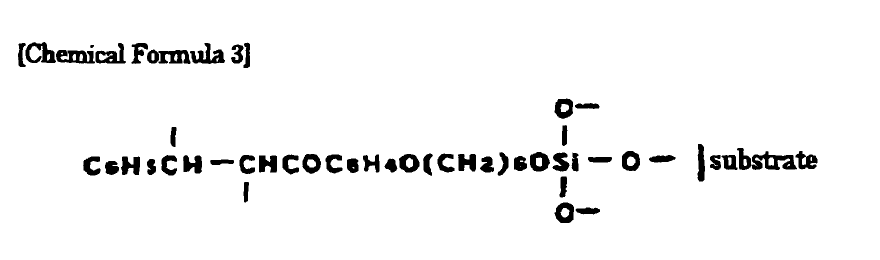

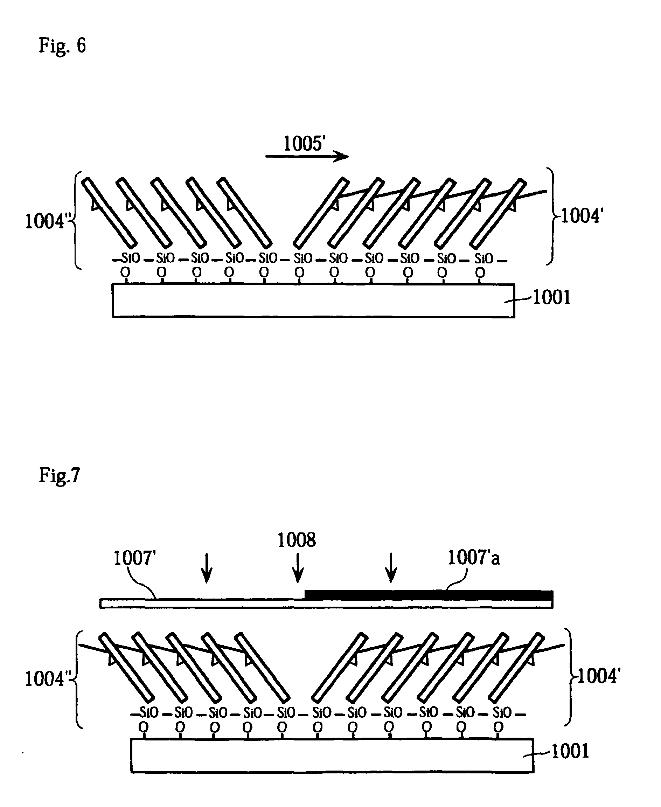

Later, after immersing the substrate again in a vessel (for approximately five minutes), the substrate was pulled up in a direction 1005' totally reverse to the above-mentioned pulling-up direction 1005 and was drain-dried. When the thin film on a surface of the substrate was analyzed with FTIR, it was confirmed that no change occurred in a crosslink area 1004' on which the UV light was irradiated already; however, the chemical adsorbate molecule 1004'' in an area which is not irradiated yet was aligned provisionally again in a direction reverse to the pulling-up direction 1005' out of a washing solution at the second time, namely, a drain-drying direction (Fig. 6).

Next, after a photomask 1007', in which a mask 1007' a for cutting off light on an area which was irradiated already is put on a polarizer (HNP'B made by POLAROID Corp.), was put so that a polarized direction was approximately parallel (such as at an angle of 3° ) with the pulling-up direction 1005', an ultraviolet ray 8 (UV light) with a wavelength of 365nm was irradiated with 100 mJ/cm² by using an extra-high-pressure mercury-vapor lamp (Fig. 7).

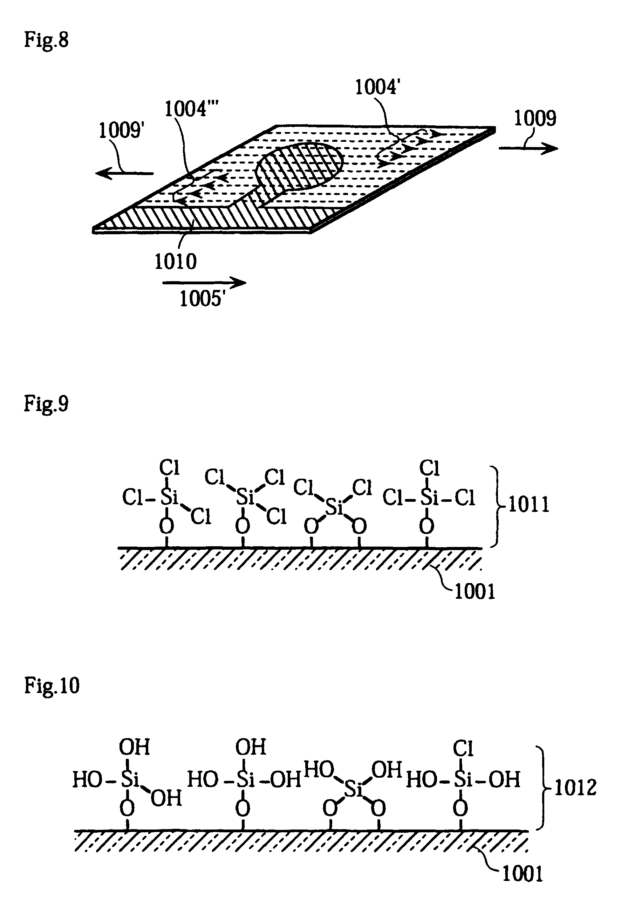

Later, as a result of an analysis by FTIR, it was confirmed that the chemisorbed molecule was aligned again in the second polarized direction 1009' in the chemisorption film 1004'' of an area on which the polarized UV light was irradiated, and that the adsorbate molecule was crosslinked 1004''' to each other by the progress of photopolymerization through a bond of carbon (Chemical Formula 3) in a vinyl group of the chemical adsorbate molecule (Fig. 8).

Next, a liquid crystal cell with a cell gap of 20 µm was constructed by using two substrates with the chemisorption film (liquid crystal alignment layer) manufactured in the above so that the chemisorption films are opposed and each exposed area is aligned in antiparallel, and a nematic liquid crystal (ZLI4792; made by MELC Corp.) was injected, and later an alignment state of the liquid crystal was examined. Consequently, it was confirmed that the injected liquid crystal molecule was aligned at a pretilt angle of approximately 1° with each substrate along the chemisorbed molecule as well as in pretilt directions 1009 and 1009' which are reverse to the pulling-up directions 1005 and 1005' out of a washing solution and are parallel with the polarized direction 1006. This result agreed with the analysis by FTIR.

Through the above, it was possible to prove that an alignment control direction over a liquid crystal molecule could be changed by changing a drain-drying direction of a washing solution and a polarized direction in irradiating a polarized light without changing a composition of a substance composing a chemisorption film.

Then, it was convenient for manufacturing a liquid crystal alignment layer with a high resistance to detachment that the molecule composing the film had a silicon at its end.

It was possible to manufacture a similar alignment layer also in the case of substituting a substance comprising at least one organic group among an alkoxysilyl group and an isocyanatosilyl group for a chlorosilyl group.

In addition, when a substance comprising, at an end or a part of a linear carbon chain (or a linear siloxane combined chain (―SiO―)), at least one organic group among a carbon trifluoride group (―CF₃), a methyl group (―CH₃), a vinyl group (―CH=CH₂), an allyl group (―CH=CH―), an acetylene group (triple bond: ―C≡C―), a phenyl group (―C₆H₅), an aryl group (―C₆H₄― ),a halogen atom, an alkoxy group (―OR; R is an alkyl group), a cyano group (―CN), an amino group (―NH₂), a hydroxyl group (―OH), a carbonyl group (=CO), an ester group (―COO ―) and a carboxyl group (―COOH) was used as a silane-based chemical adsorbate, it was confirmed that a pretilt angle could be changed according to a kind of the introduced organic group, and that the pretilt angle could be controlled in a wide range.

When a solvent including at least one organic group among an alkyl group, a fluorocarbon group, a chlorocarbon group and a siloxane group was used as a nonaqueous organic solvent, it was possible to manufacture a liquid crystal alignment layer with an excellent alignment control.

### (Embodiment 1-2)

A liquid crystal alignment layer was manufactured similarly to the above-mentioned Embodiment 1-1 except for using a mixture of compounds represented by chemical formulae C₆H₆CH=CHCOC₆H₄O(CH₂)₆OSiCl₃ and CH₃(CH₂)₁₈SiCl₃ at each of weight ratios of 1:0.1 and 1:0.2 as a chemical adsorbate, and a similar analysis to the Embodiment 1-1 was executed.

As a result, in the mixture at a weight ratio of 1:0.1, an alignment direction (pretilt direction) was reverse in each area like the Embodiment 1-1 and a pretilt angle in each area was 1.5° and 1.4°. Meanwhile, in the mixture at a weight ratio of 1:0.2, an alignment direction was reverse in each area and each pretilt angle was 2.1° and 2.3°.

Through the above, in the case of using a chemical adsorbate comprising a mixture of two kinds of chemical adsorbate molecules with a different length of the molecule, it was confirmed that if at least one of the chemical adsorbate molecules had a photosensitive group, the adsorbate molecule could be polymerized to each other ins desirable direction through the photosensitive group by an irradiation of a polarized light and thereby a liquid crystal alignment could be provided for a chemisorption film. Moreover, it was confirmed that a pretilt angle of a liquid crystal could be changed by changing a weight ratio of a mixture.

Also in the case of using a chemical adsorbate wherein a linear siloxane combined chain is inserted instead of a linear carbon chain, it was possible to change a pretilt angle of a liquid crystal by changing a weight ration of a mixture, although the pretilt angle is different from the case of a linear carbon chain.

Furthermore, an approximately similar alignment layer was obtained also in the case of substituting a substance comprising at least one organic group among an alkoxysilyl group and an isocyanatosilyl group for a chlorosilyl group in a chlorosilane-based chemical adsorbate.

### (Embodiment 1-3)

A liquid crystal alignment layer was manufactured similarly to the above-mentioned Embodiment 1-2 except for using each of mixture of compounds represented by chemical formulae C₆H₅CH=CHCOC₆H₄O(CH₂)₆O SiCl₃ and CH₃(CH₂)₂₂SiCl₃ as well as compounds represented by chemical formulae C₆H₅CH=CHCOC₆H₄O(CH₂)₆OSiCl₃ and CH₃(CH₂)₁₄SiCl₃ at a weight ratio of 1:0.1 as a chemical adsorbate, and a similar analysis to the Embodiment 1-2 was executed.

As a result, in the mixture of C₆H₅CH=CHCOC₆H₄O(CH₂)₆OSiCl₃ and CH₃(CH₂)₂₂SiCl₃, an alignment direction was reverse in each area like the above-mentioned Embodiment 1-2 and each pretilt angle was 1.1°. Meanwhile, in the mixture of C₆H₅CH=CHCOC₆H₄O(CH₂)₆OSiCl₃ and CH₃(CH₂)₁₄SiCl₃, an alignment direction was reverse in each area and each pretilt angle was 0.8°.

Through the above, it was confirmed that a pretilt angle of a liquid crystal could be changed by changing a length of a molecule composing a thin film without changing a weight ratio of a mixture.

### (Embodiment 1-4)

A liquid crystal alignment layer was manufactured similarly to the above-mentioned Embodiment 1-2 except for using a mixture of compounds represented by chemical formulae C₆H₅CH=CHCOC₆H₄O(CH₂)₆OSiCl₃ and CF₃(CF₂)₇(CH₂)₂SiCl₃ at a weight ratio of 1:0.1 as a chemical adsorbate, and a similar analysis to the Embodiment 1-2 was executed.

As a result, an alignment direction was reverse in each area like the Embodiment 1-2 and each pretilt angle was 89°. According to this, it was confirmed that a liquid crystal alignment layer having a vertical (homeotropic) alignment characteristic could be formed by using a mixture of a compound wherein a fluorine atom is inserted and another chemical adsorbate.

### (Embodiment 1-5)

In Embodiment 1-1, an adsorbate was adsorbed to a substrate on a surface of which a film of SiO₂ was formed as a preparation layer in advance, while a substrate, on a surface of which an inorganic silane-based chemical adsorbent comprising an SiCl group instead of the film of SiO₂ was contacted, was used in Embodiment 1-5.

Specifically, a compound SiCl₄ was used as the inorganic silane-based chemical adsorbent comprising an SiCl group, and a substrate 1 with an electrode described in Embodiment 1-1 was immersed in a solution, wherein the compound was dissolved in dehydrated hexadecane at a density of approximately 3 wt.%, in a dry atmosphere (a humidity of 5 %) for ten minutes. Thus, a film 1011 in a monolayer comprising such groups of >SiCl₂ and -SiCl₃ - shown in Fig. 9 was formed. Later, after washing with well-dehydrated cyclohexane and removing the excessive compound SiCl₄, a siloxane monomolecular film 1012 (preparation layer) comprising a multitude of hydroxyl groups was formed on both glass surface and ITO electrode surface by reacting with water, as shown in Fig. 10.

Later, a substrate with a liquid crystal alignment layer was manufactured by executing a similar step to Embodiment 1-1 on the substrate with the preparation layer formed by the above-mentioned method. As a result of analyzing the liquid crystal alignment layer with FTIR, it was confirmed that the alignment layer could be formed uniformly on the whole surface of the substrate like Embodiment 1-1.

The reason why the film 1011 can be formed on the substrate by the above-mentioned method is that a certain number of hydroxyl groups (―OH) exist on the glass surface and the ITO electrode surface.

A substrate with an alignment layer was manufactured similarly to Embodiment 1-1 except for using a substrate with no preparation layer, and an alignment was examined by a liquid crystal. Consequently, although the liquid crystal molecule was aligned satisfactorily on a glass substrate, a disarray of the alignment occurred on an ITO electrode and the disarray was beyond practical use. The cause is considered to be as follows: comparatively a multitude of OH groups exist on the glass surface, while a density of an OH group is low on the electrode surface; therefore, an adsorbate molecule can not be adsorbed sufficiently.

When a substance represented by a chemical formula Cl(SiCl₂O)ₙSiCl₃ (n is an integer of 1 to 3 inclusive) was substituted for a compound SiCl₄ in another experiment it was confirmed that an effect of increasing a hydroxyl group on an ITO surface became greater. This substance has an advantage of being easy to handle because of a high boiling point as compared with the compound SiCl₄.

### (Embodiment 1-6)

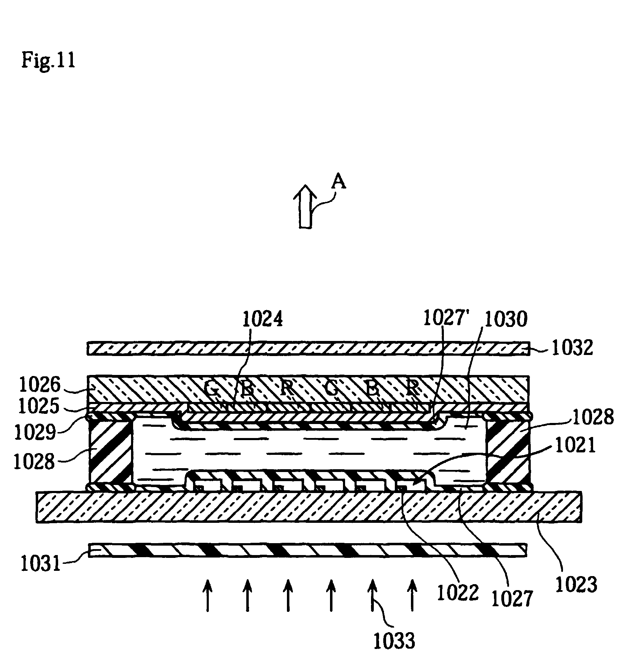

Next, a process for manufacturing a liquid crystal display device actually by using the above-mentioned liquid crystal alignment layer is described below referring to Fig. 11.

First, as shown in Fig. 11, after forming a film of SiO₂ on a first substrate 23 with a group of first electrodes 21 arrayed in a matrix and a group of transistors 22 for driving the electrodes, a thin film (chemisorption monomolecular film) was formed on a surface of the substrate by applying a chemisorption solution according to a similar step to Embodiment 1-1.

Secondly, after washing the thin film with nonaqueous organic solvent, chloroform, the substrate was pulled up out of a washing solution while setting up in a direction of a gate base line, and a molecule composing the thin film was aligned in a draining direction at the first time by drain-drying. Later, a mask with a cutoff pattern for exposing only particular one (a group of first divided pixels) of four divided pixels, into which each electrode in the above-mentioned group of electrodes was divided in a check, was put on a polarizer HNP'B (made by POLAROID Corp.), and a mask for exposing thus prepared was put and adjusted on the group of first divided pixels so that a polarized direction was parallel with the drain-drying direction, and a ray with a wavelength of 365nm (i-line) was irradiated (3.6mJ/cm², after transmitting through the polarizer) from a vertical direction for 45 seconds by using an extra-high-pressure mercury-vapor lamp with an output of 500W (the first time).

A divided pixel means four areas into which an electrode is divided. A group of divided pixels is a conception corresponding to 'a group of electrodes' comprising a multitude of electrodes arrayed in a matrix, and is used with the meaning of the inclusion of a particular divided pixel of each electrode in the group of electrodes. An irradiation of a ray is executed simultaneously to the group of divided pixels for the purpose of raising productivity.

Subsequently to a treatment at the first time, after immersing the substrate through the treatment at the first time again in the above-mentioned washing solution for five minutes, the substrate was pulled up at this time in a direction reverse to the first time, and a molecule composing the thin film in an area which is not exposed yet was aligned in a drain-drying direction at the second time by drain-drying again. Next, like the first time, the mask for exposing was put and adjusted on a group of second divided pixels so that a polarized direction was parallel with the drain-drying direction at the second time, and a polarized light was irradiated (the second time).

In addition, after immersing the substrate once again in the above-mentioned washing solution for five minutes, the substrate was pulled up in a direction vertical to the first time and the second time, and a molecule composing the thin film in an area which is not exposed yet at the first lime and the second time was aligned in a drain-drying direction at the third time by drain-drying again. Next, like the first time, the mask for exposing was put and adjusted on a group of third divided pixels so that a polarized direction was parallel with the drain-diving direction at the third time, and a polarized light was irradiated (the third time).

Lastly, after immersing the substrate once again in the above-mentioned washing solution for five minutes, the substrate was pulled up in a direction reverse to the third time, and a molecule composing the thin film in an area which is not exposed yet at the first time through the third time was aligned in a drain-drying direction at the fourth time by drain-drying again. Next, like the first time, the mask for exposing was put and adjusted on a group of fourth divided pixels so that a polarized direction was parallel with the drain-drying direction at the fourth time, and a polarized light was irradiated (the fourth time).

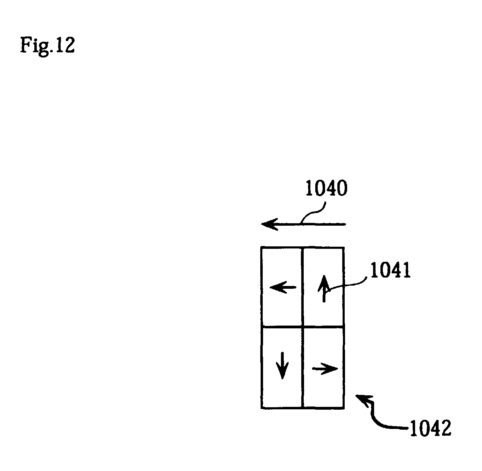

Through the above treatment it was possible to manufacture a liquid crystal alignment layer 1027 which is formed by aligning a molecule composing the thin film in each direction as shown in Fig. 12. In the Fig., 1040 indicates a direction of a gate base line, 1041 indicates an alignment direction of a liquid crystal and 1042 indicates a pixel.

On the other hand, a liquid crystal alignment layer 1027' was manufactured by a similar method to the above on a surface of a second substrate 1026 with a group of color filters 1024 and a second electrode 1025 so that an alignment direction of a pixel corresponding to each pixel in the liquid crystal alignment layer 1027 was antiparallel with its counterpart.

Next, the first substrate 1023 and the second substrate 1026 were opposed through the electrode planes with a spacer 1028 interposed, and an empty cell with a cell gap of 5 µm was manufactured by sealing and fixing a periphery of the substrates with an adhesive 1029. Later, a liquid crystal cell was made by injecting a nematic liquid crystal 1030 into the cell, and additionally a multidomain type liquid crystal display device was completed by disposing polarizers 1031, 1032 (Fig. 11).

A pretilt angle of the liquid crystal injected into the above-mentioned liquid crystal cell was approximately 1° and approximately uniform in the whole area. An alignment direction (pretilt direction) was different by 90° in each divided pixel as shown in Fig. 12.

When a viewing angle of the above-mentioned liquid crystal display device was examined by irradiating a backlight 1033, driving each transistor with a video signal, and displaying a picture in a direction of an arrow A, it was possible to obtain a viewing angle of approximately 140° right and left as well as up and down.

### (Other matters)

An alignment of each liquid crystal alignment layer and a cell gap of a first substrate and a second substrate were determined by a similar method to a method described in Embodiment 1-5 so as to be a twisted alignment at an angle of 90° with a liquid crystal molecule injected into a cell, and consequently it was possible to manufacture a TN type and multidomain type liquid crystal display device having a wide viewing angle.

An IPS (inplane switching) type TFT array wherein a pair of electrodes is formed on a surface of a substrate was used as a first substrate, and the first substrate was made a two-divided-pixel type substrate with a multidomain type alignment layer, and a display characteristic of a liquid crystal display device manufactured with this substrate was examined. As a result, it was confirmed that an IPS type and multidomain type liquid crystal display device having an excellent viewing angle characteristic could be actualized.

A ray with a wavelength of 365 nm, i-line of an extra-high-pressure mercury-vapor lamp, was used as a ray for exposing in the above-mentioned Embodiments, and additionally it is possible to use a ray with a wavelength of 436 nm, 405 nm and 254 nm as well as a ray with a wavelength of 248 nm by KrF excimer laser according to an absorption of ray in a molecule composing the thin film. Among them, the ray with a wavelength of 248 nm and 254 nm has a high efficiency in providing alignment because of being absorbed in most substances.

A photosensitive group, a linear carbon chain or a linear siloxane combined chain, and a silicon are inserted into a chemical structure of a chemical adsorbate molecule, and besides them, a nematic liquid crystal structure having a particular surface energy and a ferroelectric liquid crystal structure may be inserted. Thus, it is possible to raise an alignment control force further.

As described above, according to the first invention group, it is possible to provide an extremely thin alignment layer which is excellent in an alignment control characteristic over a liquid crystal molecule and durability, and does not hinder light transmission and electric field. Moreover, according to the first invention group, since the operation of rubbing is not necessary for providing an alignment, such problems due to rubbing as an alignment defect resulting from irregularities on a substrate plane and a display defect resulting from dust in rubbing can be solved at a time. Furthermore, according to a manufacturing method in the first invention group, a liquid crystal alignment layer having an excellent alignment control force, wherein a pretilt angle and a pretilt direction can be controlled in each area of the alignment layer, can be manufactured with a high yield. Therefore, it was possible to prove that a multidomain type liquid crystal display device having an excellent viewing angle characteristic could be provided by using such a liquid crystal alignment layer.

### [DISCLOSURE OF THE SECOND INVENTION GROUP]

The second invention group is intended for providing a multidomain type liquid crystal display device of a homeotropic alignment mode having a wide viewing angle and a high-speed response; wherein a display defect resulting from an alignment defect of a liquid crystal molecule does not occur, and the following problems are solved in view of the problems in a multidomain type liquid crystal display device of a conventional homeotropic alignment mode, such as the occurence of a rubbing stripe in a multidomain type liquid crystal display device using a rubbing method, the deterioration of an alignment layer due to the development and detachment of photoresist, the unevenness of a pretilt angle and a pretilt direction of a liquid crystal molecule, or the image persistence, the dependence of a display characteristic on temperature and the inferiority in shock resistance in a liquid crystal display device of a ferroelectric liquid crystal (FLC) mode and an antiferroelectric liquid crystal (AFLC) mode.

The second invention group is constituted as described below in order to solve the above-mentioned problems.
(1) A liquid crystal display device comprising a pair of substrates with a display electrode inside each of them, a liquid crystal alignment layer on an inside of at least one of the above-mentioned pair of substrates, a liquid crystal layer including a liquid crystal with a negative dielectric anisotropy disposed in a gap between the above-mentioned pair of substrates, and a polarizer disposed outside the above-mentioned pair of substrates; wherein a liquid crystal molecule of the above-mentioned liquid crystal layer is aligned approximately vertically to the substrate under no application of voltage, the above-mentioned liquid crystal alignment layer is a thin film in a monolayer in which a chemical adsorbate including a compound having a photosensitive group is bonded directly or through a preparation layer to the substrate plane at an end of a major axis of a molecule and a molecule having at least the photosensitive group is crosslinked to each other in a particular direction at the photosensitive group part, and an inclination and/or an alignment direction of a molecule composing the above-mentioned thin film to the substrate are different in each of divided sections of the alignment layer into which a pixel is divided with a predetermined pattern.
   A liquid crystal display device having the above-mentioned constitution is characterized by using a liquid crystal alignment layer comprising a thin film in a monolayer which is composed so that an inclination and/or an alignment direction of a molecule composing the thin film to the substrate are different in each of divided sections of the alignment layer into which a pixel is divided with a predetermined pattern. The following function and effect are obtained by this characteristic.
   First, the liquid crystal alignment layer is extremely thin (in nanometer order) because of comprising a thin film in a monolayer. Accordingly, the thickness of cell is never increased due to the formation of the alignment layer. In addition, the alignment layer scarcely hinders a light transmission, and an electric field for driving a liquid crystal because of having no or little electrical insulation. Secondly, since the liquid crystal alignment layer is a thin film in a monolayer, each molecule composing the thin film contributes to an alignment control of a liquid crystal molecule. Therefore, an alignment of the liquid crystal molecule can be controlled with an extremely high efficiency and the liquid crystal molecule is aligned and rearranged smoothly by an application of voltage. Lastly, since a liquid crystal alignment layer constituted as described above having such a function has a structure wherein a molecule composing the thin film is bonded chemically on a substrate at an end of the molecule and the molecule is crosslinked to each other, the alignment layer is excellent in close adhesion and fixation to the substrate and an alignment state is stabilized by crosslinking in terms of three-dimensional structure. Accordingly, the alignment layer is excellent in durability. Through the above, according to the above-mentioned constitution, it is possible to actualize a liquid crystal display device having a characteristic of little display unevenness, excellent luminance and high-speed response, and no deterioration of display performance over a long period.
   As described in 'DISCLOSURE OF THE FIRST INVENTION GROUP', a conventional liquid crystal alignment layer (such as a polymer film made of the above-mentioned polyimide), which is composed closely with a long main chain tangled up, has difficulty in obtaining a sufficient alignment control force since only a surface layer of the film can contribute to an alignment of a liquid crystal. Moreover, in a conventional liquid crystal alignment layer for which an alignment is provided by rubbing a polymer film, there is a possibility that the alignment is changed or deteriorated by an external stimulus such as heat and rubbing. Furthermore, since an alignment layer in a conventional device is bonded on a substrate by the anchor effect it is low in a bonding power to the substrate. In addition, since such a polymer film as polyimide has a thick coating and a high electrical resistance, it hinders a light transmission and causes an increase in a driving voltage. Accordingly, in a device using such a liquid crystal alignment layer, it is difficult to obtain such a performance as a liquid crystal display device according to the present invention.
   A pretilt angle and/or a pretilt direction of a liquid crystal molecule of the above-mentioned liquid crystal layer in a liquid crystal display device having the above-mentioned constitution are controlled by an inclination and/or an alignment direction of a molecule composing the above-mentioned thin film to a substrate. The meaning of a pretilt angle and a pretilt direction is the same as the case of the above-mentioned first invention group. The pretilt angle means an angle of a major axis of a liquid crystal molecule with a substrate plane, and the pretilt direction means a direction of a major axis of a liquid crystal molecule on a substrate plane.
   A liquid crystal display device having the above-mentioned constitution can be constituted as described below.
   An inclination and/or an alignment direction of a molecule composing a thin film in adjacent divided sections of an alignment layer can be made symmetrical to their respective counterparts with respect to the boundary plane between the above-mentioned adjacent divided sections of an alignment layer. According to this constitution, it is possible to provide a display device with a wide viewing angle in which an image quality never varies with an angle of an observer.
   The above-mentioned compound having a photosensitive group can be a compound having a photosensitive group, a linear carbon chain and/or a linear siloxane combined chain, and a functional group including a silicon atom.
   The above-mentioned thin film can comprise a molecule with repellency, or two or more kinds of molecules including a molecule with repellency.
   The above-mentioned molecule with repellency can be a molecule having a fluorocarbon group as an end group.
   The above-mentioned molecule having a fluorocarbon group as an end group can be made further to have a linear carbon chain and/or a linear siloxane combined chain, and a functional group including a silicon atom.
   A switching element for controlling a voltage applied to a display electrode can be provided for one of the above-mentioned pair of substrates. According to this constitution, it is possible to provide an active matrix type liquid crystal display device of a homeotropic alignment mode, which has a wide viewing angle, a high image quality, a high contrast and an excellent high-speed response.
   A flattening film for flattening the display electrode can be provided between the above-mentioned substrate and display electrode.
   At least one of a pair of display electrodes can be structured so that a pixel unit is composed of a plurality of divided electrodes corresponding to the above-mentioned divided section of an alignment layer, and a predetermined gap is provided between each of the above-mentioned divided electrodes. According to this constitution, an electrode fringe electric field in which an electric flux line is inclined in a reverse direction to each other is formed near the above-mentioned gap, and a force of inclining a liquid crystal molecule in a different direction from each other acts with the boundary of the above-mentioned gap. Therefore, an alignment of the liquid crystal molecule can be controlled certainly and promptly by a combination of this alignment control force and an alignment control force of the alignment layer, and consequently the driving can be controlled smoothly and promptly without causing an alignment defect of the liquid crystal molecule in each of a plurality of the divided electrodes.
   A flattening film for flattening the display electrode can be provided between the above-mentioned substrate and display electrode.
   One of the above-mentioned pair of substrates or one of the above-mentioned pair of display electrodes can comprise a material for reflecting light. According to this constitution, a reflection type liquid crystal display device can be made without disposing another member.
   A pretilt angle θp of a liquid crystal molecule can satisfy 80° ≦θp<90°. When a pretilt angle θp satisfies 80° ≦θp<90° , a high response and an image quality with a high contrast are obtained since the liquid crystal molecule can be aligned and rearranged smoothly by ON/OFF of voltage.
   At least one retardation plate can be provided outside one of the above-mentioned pair of substrates. According to this constitution, a viewing angle can be made even wider. A retardation plate may be either of positive and negative retardation plates.
(2) The above-mentioned liquid crystal display device can be manufactured by a manufacturing method comprising the following constitution.
   A method of manufacturing a liquid crystal display device comprising a pair of substrates with a display electrode inside each of them, a liquid crystal alignment layer on an inside of at least one of the above-mentioned pair of substrates, a liquid crystal layer including a liquid crystal with a negative dielectric anisotropy disposed in a gap between the above-mentioned pair of substrates, and a polarizer disposed outside the above-mentioned pair of substrates; wherein a liquid crystal molecule of the above-mentioned liquid crystal layer is aligned approximately vertically to the substrate under no application of voltage, said method comprising the steps of forming the display electrode on each of the above-mentioned substrates; forming a monomolecular film (a thin film in a monolayer) by chemisorbing a chemical adsorbate comprising a compound having a functional group with repellency and a compound having a photosensitive group on each of the above-mentioned display electrodes; aligning a molecule composing the thin film in a certain direction provisionally by drain-drying the nonaqueous organic solvent in a certain direction after infiltrating a nonaqueous organic solvent into the above-mentioned thin film; forming the substrate with the alignment layer, in which an inclined direction of the molecule composing the thin film is different in each of a plurality of patterned divided sections of the alignment layer into which a pixel area is divided, by irradiating a patterned energy beam on the provisionally aligned thin film in the step of aligning provisionally, aligning the molecule composing the thin film again, crosslinking the molecule composing the thin film to each other, and fixing the above-mentioned alignment state at the second time; constructing the substrate by opposing the above-mentioned pair of substrates with the alignment layer so that the divided section of each alignment layer corresponds to its counterpart, and sticking the substrates with a predetermined gap between the alignment layers; and injecting a liquid crystal material including a liquid crystal with a negative dielectric anisotropy into the above-mentioned gap to form the liquid crystal layer.
   A method of manufacturing a liquid crystal display device having the above-mentioned constitution can be constituted as described below. That is:
   A compound having a fluorocarbon group as an end group can be used as the above-mentioned compound having a functional group with repellency. When a molecule having a functional group with repellency is included in a molecule composing a thin film in a monolayer; the molecule is aligned in a vertical direction to a substrate by the function of repellency. Therefore, a liquid crystal alignment layer having a large pretilt angle is obtained, which is convenient since an inclination to the substrate can be made even larger when a functional group with repellency exists at an end. The above-mentioned compound having a functional group with repellency is bonded to the substrate at a hydrophilic group part (for instance, a functional group including a silicon atom), and thereby the above-mentioned fluorocarbon group as an end group is located at an end of a molecule which sticks out of the substrate.
   A compound having a linear carbon chain and/or a linear siloxane combined chain, and a functional group including a silicon atom can be used further as the above-mentioned compound having a fluorocarbon group as an end group. A compound having a linear carbon chain and/or a linear siloxane combined chain is convenient for controlling an alignment of a liquid crystal molecule since a length of the chain can be determined without any limitation. In a compound having a linear siloxane combined chain in its chain, since its molecule can rotate in the center of oxygen atom freely, an adsorbate molecule (a molecule composing a thin film) is inclined easily in a predetermined direction. Therefore, a group of the adsorbate molecules can be inclined in a predetermined direction even more uniformly. Meanwhile, a compound having a functional group including a silicon atom can be chemisorbed easily through a siloxane bond to a hydroxyl group on a surface of a display electrode. Therefore, a liquid crystal alignment layer with an excellent resistance to detachment can be formed.
   A compound having a linear carbon chain and/or a linear siloxane combined chain, and a functional group including a silicon atom can be used further as the above-mentioned compound having a photosensitive group. A compound having such a functional group can be chemisorbed, as described above, on a surface of a display electrode through the functional group including a silicon atom. The molecule can be crosslinked easily to each other at its photosensitive group part by irradiating a chemisorbed molecule. Therefore, an alignment layer having a stable structure of alignment can be bonded firmly to a substrate, and a liquid crystal alignment layer with excellent liquid crystal alignment characteristic and resistance to detachment can be formed. The function and effect of a linear carbon chain and/or a linear siloxane combined chain are the same as the above-mentioned description.
   The above-mentioned step of forming a substrate with an alignment layer can be made the step of changing an inclination and/or an alignment direction of a molecule composing the thin film to a substrate plane in each of a plurality of patterned divided sections of an alignment layer, into which an area on a thin film corresponding to a pixel is divided, by irradiating a polarized light two or more times, with a different polarized direction and a different irradiation area in each irradiation, on a provisionally aligned thin film plane in the above-mentioned step of aligning provisionally.
   The above-mentioned step of forming a substrate with an alignment layer can be made the step of repeating two or more times a series of steps comprising the first alignment step of aligning a molecule composing the thin film in a certain direction provisionally by drain-drying in a certain direction after infiltrating a nonaqueous organic solvent into a thin film in a monolayer, and the second alignment step of irradiating a polarized light having a polarized direction approximately parallel with a provisional alignment direction in the above-mentioned first alignment step; and the step of changing an inclination and/or an alignment direction of a major axis of the molecule composing the thin film to the substrate plane in each of a plurality of patterned divided sections of an alignment layer, into which an area on the thin film corresponding to a pixel is divided, by making a drain-drying direction at the N-th time (N is an integer of 2 or more) differ from a drain-drying direction at the first time through the [N ― 1]-th time as well as making an irradiation area on a substrate in an irradiation of a polarized light at the N-th time subsequent to the drain-drying at the N-th time differ from an irradiation area at the first time through the [N ― 1]-th time.
   Since an inclination and/or an alignment direction, particularly an alignment direction, to a substrate plane can be changed more certainly by making a drain-drying direction of a nonaqueous organic solvent agree with a polarized direction of an irradiated light, a multidomain type liquid crystal alignment layer of high quality, in which the inclination and/or the alignment direction to a substrate plane are different in each area, can be obtained by repeating a series of steps comprising a drain-drying and an irradiation of a polarized light. Accordingly, a liquid crystal display device which is excellent in such characteristics as a viewing angle, a contrast and a response can he manufactured by using such a liquid crystal alignment layer.
   The step of providing a switching element for controlling a voltage applied to a display electrode for one of the above-mentioned pair of substrates can be added further to the above-mentioned manufacturing method.
   The step of providing a flattening film for flattening the display electrode between the above-mentioned substrate and display electrode can be added further to the above-mentioned manufacturing method.
   According to this constitution of providing a flattening film, even if some irregularities, dirt, scratches and switching elements exist on a substrate, a plane on which the display electrode is formed can be flattened since the irregularities and the like are covered with the flattening film. Consequently, a display electrode plane on the flattening film can be flattened. Therefore, the distortion of electric field (a lateral electric field) near the switching element can be prevented in the case of applying voltage between the display electrodes. Moreover, such a problem is solved that a liquid crystal molecule near an alignment layer is not aligned in a predetermined direction. Since a gap (cell gap) between the substrates is equal over the whole surface of a liquid crystal display device by a flat display electrode plane, the occurrence of display unevenness is reduced. Furthermore, since it is unnecessary to consider irregularities on a surface of the substrate and irregularities by the switching element, the cell gap can be made narrower, and thereby an electric field in a liquid crystal layer becomes intense. Consequently, the response speed can be made even higher.
   The step of forming a plurality of divided electrodes corresponding to the above-mentioned divided section of an alignment layer by providing a groove with a predetermined gap for at least one of the above-mentioned pair of display electrodes can be added further to the above-mentioned manufacturing method.
   One of the above-mentioned pair of substrates or one of the above-mentioned pair of display electrodes can comprise a material for reflecting light. When the display electrode is formed by the material for reflecting light, the display electrode serves as a reflector and it is unnecessary to manufacture a reflector specially. Therefore, a reflection type liquid crystal display device can be manufactured at a low cost.

### [BRIEF DESCRIPTION OF THE DRAWINGS OF THE SECOND INVENTION GROUP]

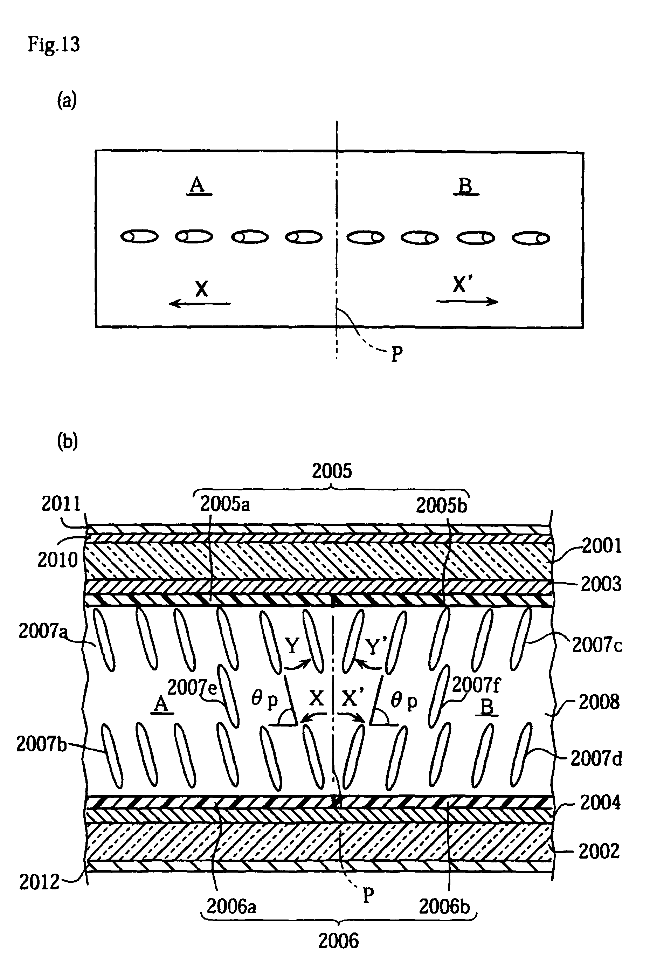

Fig. 13 is a view for describing a liquid crystal display device and an alignment state of a liquid crystal molecule according to Embodiment 2-1.

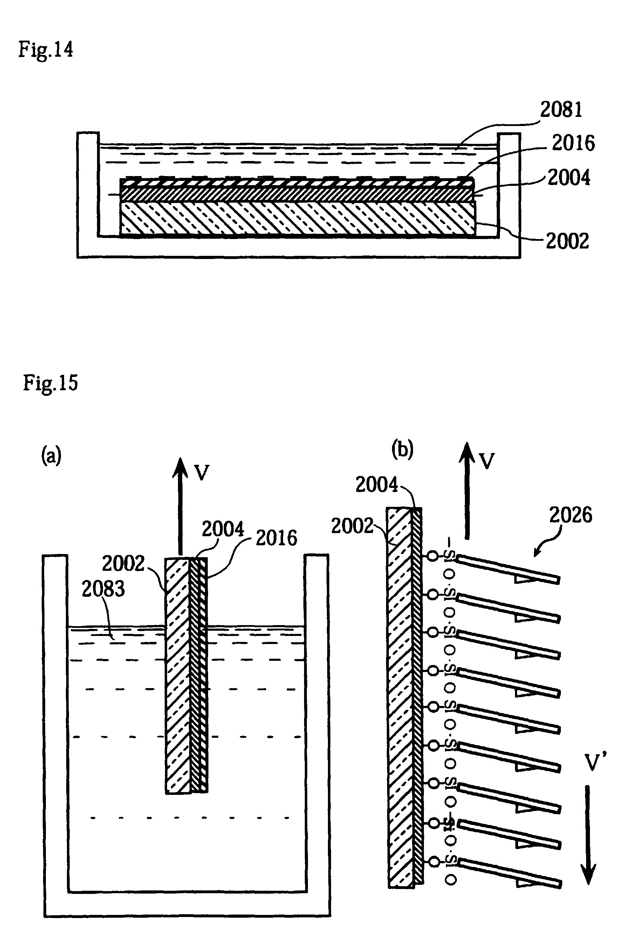

Fig. 14 is a view for describing a method of manufacturing a display device according to Embodiment 2-1.
Fig. 15 is a view for describing a method of manufacturing a display device according to Embodiment 2-1.

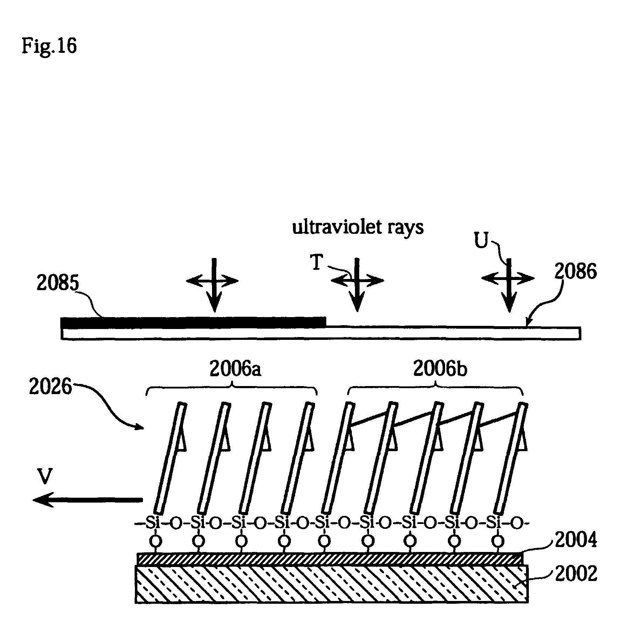

Fig. 16 is a view for describing a method of manufacturing a display device according to Embodiment 2-1.

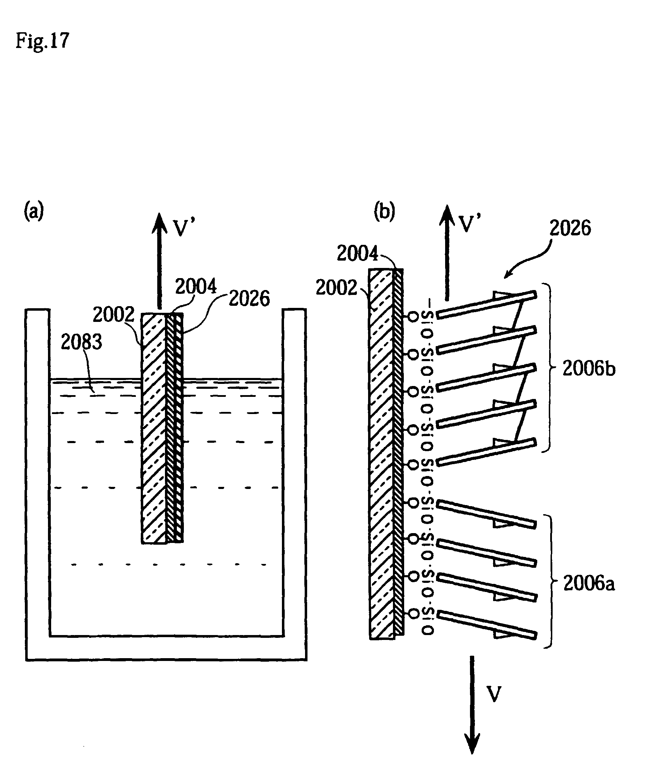

Fig. 17 is a view for describing a method of manufacturing a display device according to Embodiment 2-1.

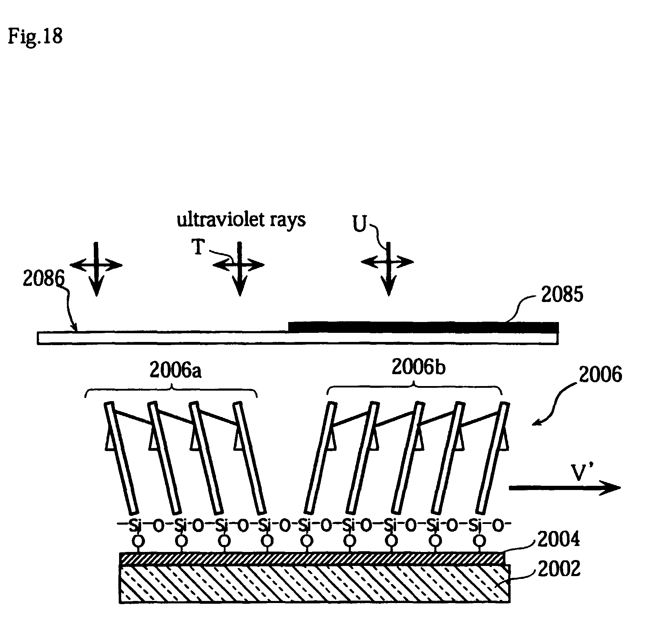

Fig. 18 is a view for describing a method of manufacturing a display device according to Embodiment 2-1.

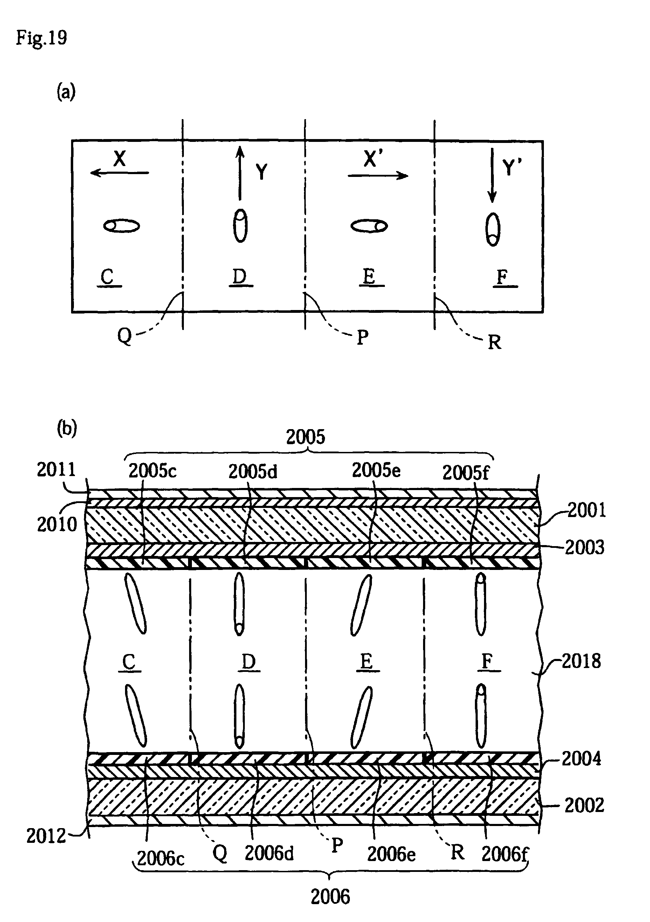

Fig. 19 is a view for describing a liquid crystal display device and an alignment state of a liquid crystal molecule according to Embodiment 2-2.

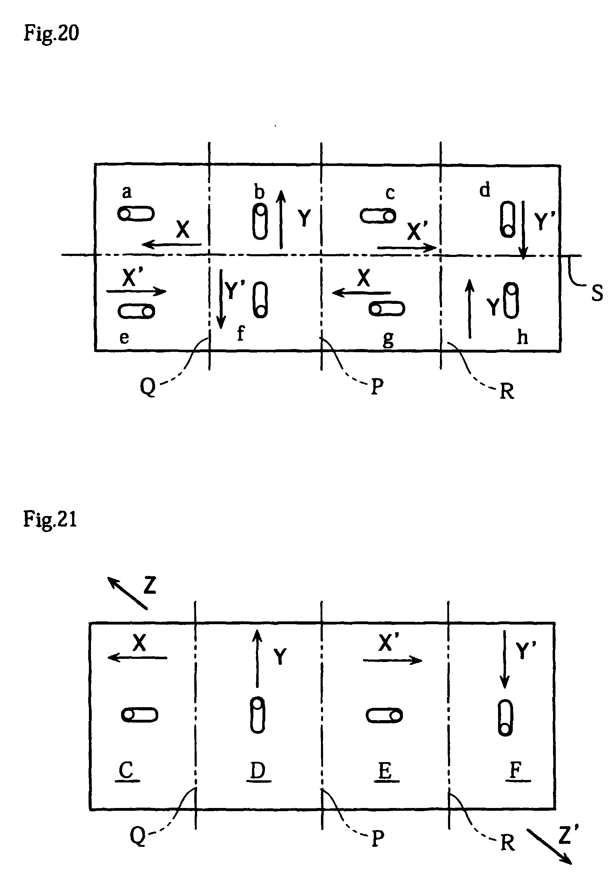

Fig. 20 is a plan view for describing an alignment state of a liquid crystal molecule.
Fig. 21 is a plan view for describing an alignment state of a liquid crystal molecule.

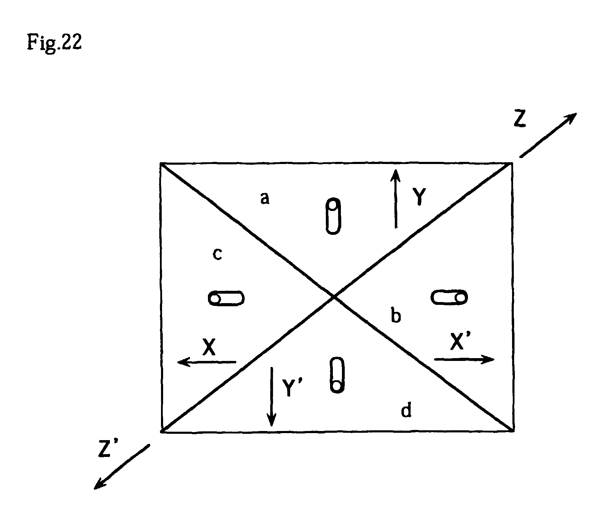

Fig. 22 is a plan view for describing an alignment state of a liquid crystal molecule.

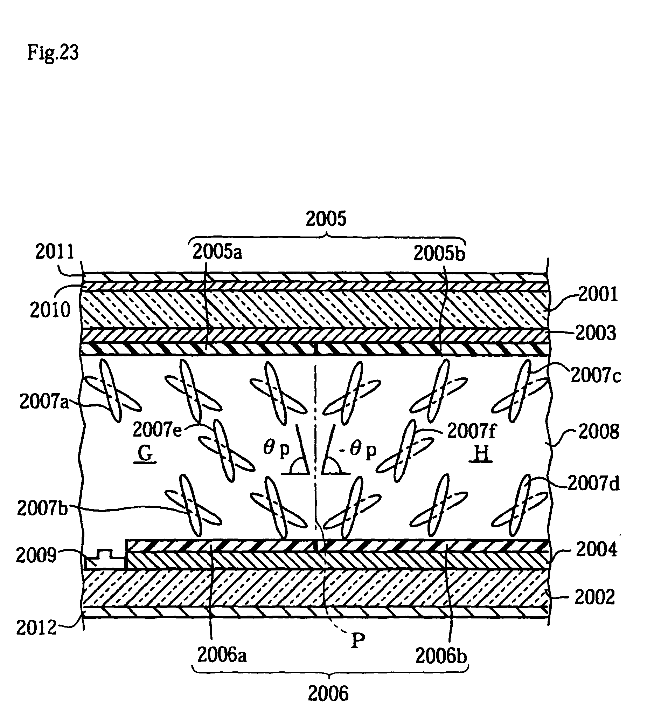

Fig. 23 is a cross sectional view showing a summary of an active matrix type liquid crystal display device according to Embodiment 2-3.

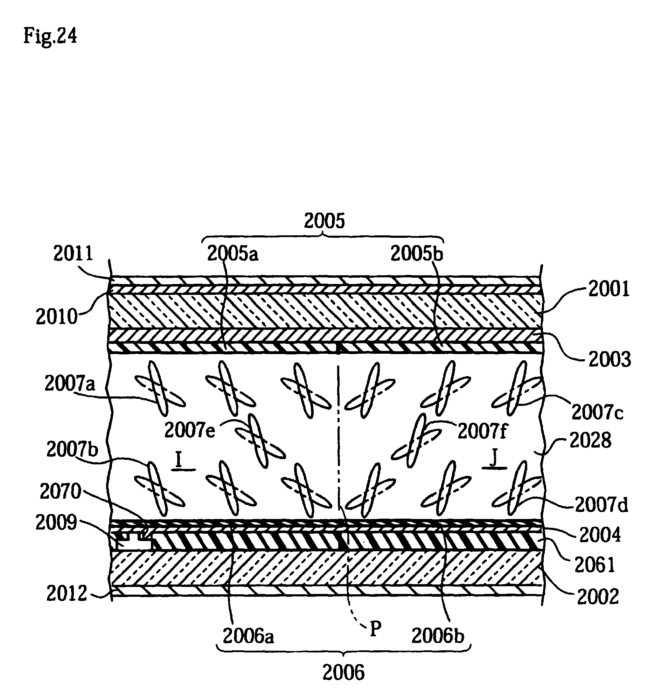

Fig. 24 is a cross sectional view showing a summary of an active matrix type liquid crystal display device according to Embodiment 2-4.

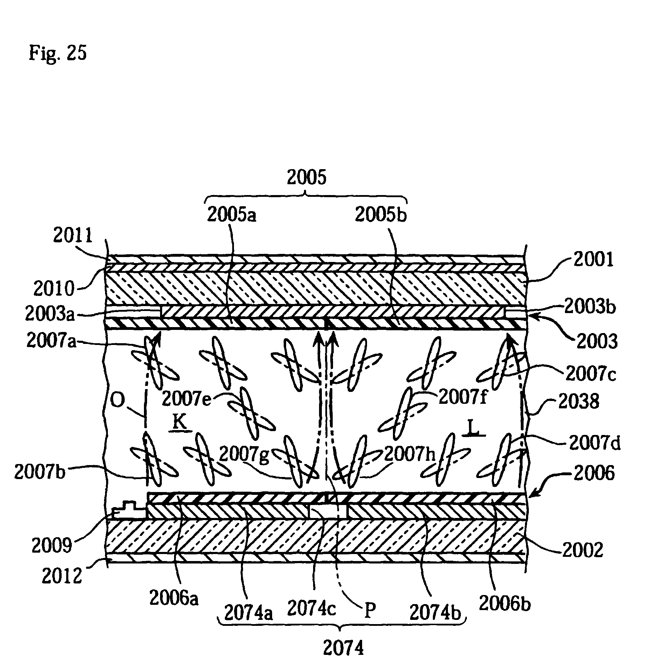

Fig. 25 is a cross sectional view showing a summary of an active matrix type liquid crystal display device according to Embodiment 2-5.

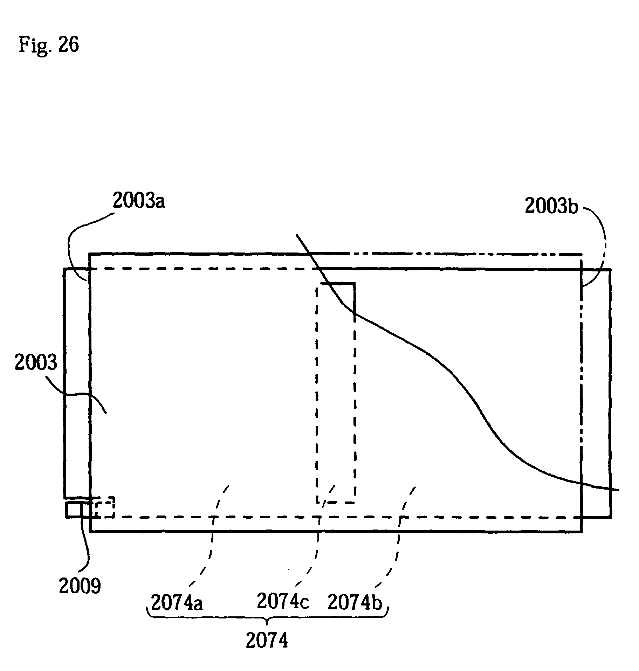

Fig. 26 is a partial cutaway plan view for describing a correspondence relation of a pair of display electrodes in a display device according to Embodiment 2-5.

### [DETAILED DESCRIPTION OF THE PREFERRED EMBODIMENTS OF THE SECOND INVENTION GROUP]

The contents of the second invention group are described concretely, based on embodiments below.

### (Embodiment 2-1)

Embodiment 2-1 is described referring to Figs. 13 to 18. A portion for which the description is unnecessary is omitted in Figs. 13 to 18 (other figures as well). Some portions are illustrated with exaggeration or reduction in order to make the description easier.

A transmission type liquid crystal display device according to Embodiment 2-1, as shown in Fig. 13 (b), has an upper substrate 2001, a lower substrate 2002 and a liquid crystal layer 2008 interposed between the upper substrate 2001 and the lower substrate 2002. A display electrode 2003 is formed on the inside surface of the upper substrate 2001, and an alignment layer 2005 is formed on the display electrode 2003. A negative film retardation plate 2010 is provided for the outside surface of the upper substrate 1. In addition, a polarizer 2011 is provided outside the film retardation plate 2010.

A display electrode 2004 is formed on the inside surface of the lower substrate 2002, and an alignment layer 2006 is formed on the display electrode 2004. In addition, a polarizer 2012 is provided outside the lower substrate 2002.

The above-mentioned upper substrate 2001 and lower substrate 2002 are transparent substrates comprising glass, quartz and the like. The above-mentioned display electrodes 2003 and 2004 are transparent conductive films comprising ITO (Indium Tin Oxide). The above-mentioned liquid crystal layer 2008 includes a nematic liquid crystal (MJ-951152; made by MELC Corp.) with a negative dielectric anisotropy, and a thickness of the liquid crystal layer 2008 is, for instance, 3.5 µm. This liquid crystal layer 2008 is composed of bisected liquid crystal alignment areas A, B in each pixel, wherein an alignment direction of a liquid crystal molecule is different. A liquid crystal molecule in the liquid crystal alignment area (hereinafter referred to as simply 'alignment area') A and a liquid crystal molecule in the alignment area B are inclined in a reverse direction to each other for the boundary plane P, and a pretilt angle in both areas is an approximately right angle. Thus, since a pixel is divided into two alignment areas A, B and additionally a liquid crystal molecule in the alignment area A and a liquid crystal molecule in the alignment area B are inclined in a reverse direction to each other for the boundary plane P, the refractive anisotropy of the liquid crystal molecule is averaged and a wide viewing angle is obtained when a display screen is observed from a diagonal direction.

The above-mentioned alignment layers 2005 and 2006 are thin films in a monolayer (monomolecular film), which are formed by chemisorbing a group consisting of a plurality of silane-based molecules on a surface of the display electrodes 2003 and 2004 through a siloxane bond (―SiO―), and crosslinking the group in a state of inclining in a predetermined direction (X direction in the divided areas 2005a, 2005b and X' direction in the divided areas 2006a, 2006b) in each of divided areas 2005a, 2005b, 2006a and 2006b. Thus, since the alignment layers 2005 and 2006 are formed by the chemisorption on a surface of the display electrodes 2003 and 2004 through a siloxane bond, the alignment layers 2005 and 2006 are excellent in resistance to detachment. Moreover, the alignment layers 2005 and 2006 has a monolayer and a thickness of them is extremely thin.

When a liquid crystal molecule contacts these alignment layers 2005 and 2006, an end of the liquid crystal molecule enters a gap between the silane-based molecules. Then, as described above, since the plurality of silane-based molecules are inclined in a predetermined direction in each of the areas 2005a, 2005b, 2006a and 2006b, liquid crystal molecules 2007a to 2007d near each of the areas are controlled by the plurality of silane-based molecules, and are inclined in a direction wherein the silane-based molecules are inclined. In this Embodiment, each of the liquid crystal molecules 2007a to 2007d is inclined at a pretilt angle of θp with the upper substrate 2001 and the lower substrate 2002. According to such alignment treatment of the alignment layers 2005 and 2006, as described above, an alignment area of a liquid crystal in the liquid crystal layer 2008 is divided into two alignment areas A, B for the boundary plane P. In a mode shown in Fig. 13 (a), the divided areas 2005a, 2006a of the alignment layer corresponding to the alignment area A and the divided areas 2005b, 2006b of the alignment layer corresponding to the alignment area B are formed equally, and thereby the alignment areas A, B are symmetrical with respect to the boundary plane P. A pixel unit is composed of the alignment areas A, B.

A thin film in a monolayer consisting of the above-mentioned group of silane-based molecules comprises a thin film precursor substance including a molecule (hereinafter referred to as 'molecule A') having a linear carbon chain and/or a linear siloxane combined chain, a functional group having a silicon (Si) atom, and a photosensitive group as well as a molecule (hereinafter referred to as 'molecule B') having a linear carbon chain and/or a linear siloxane combined chain, a functional group having a silicon (Si) atom, and a fluorocarbon group as an end group. Since the above-mentioned molecule A as the molecule of the thin film precursor substance has the photosensitive group, the alignment layers 2005 and 2006 can have a structure of crosslinking by the polymerization of the photosensitive group to each other. On the other hand, since the above-mentioned molecule B has the fluorocarbon group as an end group, a pretilt angle of a liquid crystal molecule can be made wider by the function of repellency of the fluorocarbon group.

Furthermore, because of having the functional group including a silicon atom, the above-mentioned molecules A, B can have a siloxane bond to a hydroxyl group on a substrate plane (a surface of the display electrodes 2003 and 2004) with a display electrode, and can be bonded chemically and firmly to a surface of the substrate. In particular, in the case of a molecule having the functional group including a silicon atom at the other end of a major axis of the molecule, the molecule is chemisorbed easily to the substrate plane and a length of the molecule extending from the substrate plane becomes longer. Consequently, it is preferable that an alignment control force over a liquid crystal molecule becomes intense. In the case of having the linear siloxane combined chain in a chain, a molecule can rotate in the center of oxygen atom freely and the degree of freedom in the molecule is raised. Therefore, the linear siloxane combined chain is preferable in that it is easy to incline the molecule in a predetermined direction even more uniformly. In the case of having the linear carbon chain, it is preferable that a length of the chain can be determined without any limitation. In addition, it is preferable that a carbon number of the above-mentioned linear carbon chain is within 5 to 30 inclusive, more preferably 8 to 25 inclusive. The reason is as follows: it is occasionally difficult to align a liquid crystal molecule in a vertical direction to the upper substrate 2001 or the lower substrate 2002 if the above-mentioned carbon number is less than 5, while the linear carbon chain is occasionally inappropriate for a material of an alignment layer if the above-mentioned carbon number is more than 30.

A carbon trifluoride group (―CF₃), a carbon difluoride group (―CF₂) and the like are mentioned as the above-mentioned fluorocarbon group. A cinnamoyl group, a methacryloyl group and the like are mentioned as the above-mentioned photosensitive group. It is preferred that the above-mentioned functional group having an Si atom is a group having a bond with a hydroxyl group (―OH). Specifically, a chlorosilyl group (― SiCl), a dichlorosilyl group (― SiCl₂), a trichlorosilyl group (―SiCl₃), an alkoxysilyl group and an isocyanatosilyl group are mentioned.

It is preferable that a ratio in a molecule number of the above-mentioned molecule A to the above-mentioned molecule B is within 1:0.1 to 0.01:1. If the ratio of the molecule A is too low, it is difficult to keep a monomolecular film inclined in a predetermined direction since the molecule B which is never crosslinked increases. That is, it is difficult to align each liquid crystal molecule uniformly in a predetermined direction, and consequently an alignment defect is caused easily. Meanwhile, if the ratio of the molecule A is too high, it is difficult to align the liquid crystal molecule at a large pretilt angle since the molecule B having a fluorocarbon group decreases relatively. Accordingly, the above-mentioned range is preferable, and a pretilt angle of the liquid crystal molecule can be determined at a desirable angle properly by changing the ratio of the molecule A to the molecule B within the above-mentioned range.

Next, a method of manufacturing a liquid crystal display device according to Embodiment 2-1 is described.

First, the display electrode 2004 was formed on the lower substrate 2002 by a publicly known method. A film of SiO₂ (not shown in figures) was formed on the above-mentioned display electrode 2004 by a method of CVD (Chemical Vapor Deposition) and a method of sputtering. On the other hand, a silane-based chemical adsorbate (or called surface active agent) represented by the following Chemical Formula 4 and Chemical Formula 5 was prepared as the above-mentioned molecule A and molecule B respectively, and a mixture solution in which a mixture ratio in a molecule number of the Chemical Formula 4 to the Chemical Formula 5 is 1:0.08 was produced. A chemisorption solution was obtained by dissolving the mixture solution in dehydrated hexadecane (nonaqueous organic solvent) at a density of approximately 1 wt.%.

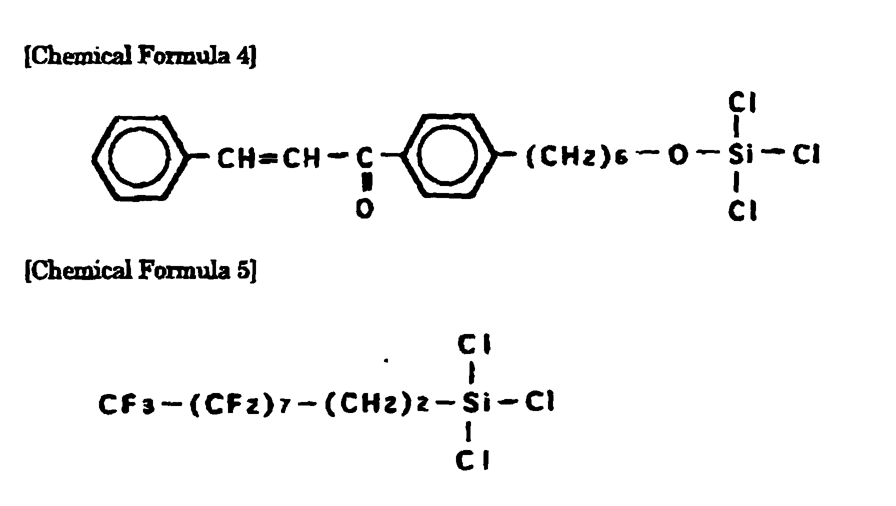

The nonaqueous organic solvent is not limited to the above-mentioned hexadecane. Such hydrocarbon-based solvents as pentane, hexane, cyclohexane, octane and decane; such chlorine-based solvents as chloroform, carbon tetrachloride, trichloroethylene and methylene chloride; and a fluorine-based solvent are usable besides the hexadecane. Above all, it is preferable to use a nonaqueous organic solvent having at least one functional group among an alkyl group, a fluorocarbon group, a chlorocarbon group or a siloxane group, and an alignment layer with an excellent alignment control characteristic, wherein a liquid crystal molecule can be aligned in a desirable direction, is obtained by using such a nonaqueous organic solvent.

Subsequently to the above, as shown in Fig 14, a monomolecular film 2016 was formed by chemisorbing a molecule represented by the above-mentioned Chemical Formula 4 and Chemical Formula 5 on the display electrode 2004 while immersing the lower substrate 2002 in a chemisorption solution 281 for approximately an hour. As described above, the lower substrate 2002 and the display electrode 2004 are made of glass and ITO respectively, and such a functional group having active hydrogen as an ―OH group, an ―NH₂ group, an > NH group and an ≡SH group exists on these surfaces. Accordingly, a functional group having Si in the chemical adsorbate molecule and a functional group among the above cause a reaction of eliminating hydrochloric acid and have a covalent bond of ― SiO ― or ― SiN <. In this Embodiment, a reaction of eliminating hydrochloric add was caused between an ― SiCl₃ and an ― OH group, as represented by the following Chemical Formula 6.

A method of applying the above-mentioned chemisorption solution 2081 on a surface of the display electrode 2004 may be adopted instead of immersing the lower substrate 2002 in the chemisorption solution 2081.

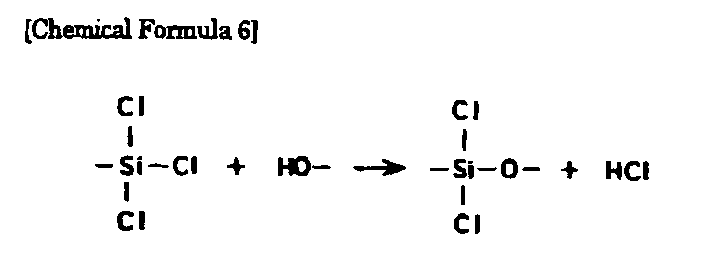

Next, after taking the lower substrate 2002 out of the above-mentioned chemisorption solution 2081, the operation of washing by immersing the above-mentioned lower substrate 2002 in a washing solution 2083 comprising well-dehydrated chloroform for ten minutes was repeated three times with the renewal of the washing solution each time. Since the silane-based chemical adsorbate which does not react is removed by this operation of washing and such dirt as dust is reduced, it is possible to obtain an alignment layer with excellent alignment control characteristic and transparency.

Subsequently, the washing solution 2083 was drain-dried as shown in Figs. 15(a) and (b). Specifically, the lower substrate 2002 was pulled up out of the washing solution 2083 in a direction of an arrow V (refer to Fig. 15 (a)), and additionally the washing solution left on the substrate plane was drain-dried while keeping in this pulling-up direction (refer to Fig. 15 (b)). Thus, a molecule composing the monomolecular film 2016 was inclined in a draining direction V'. An inclination by this operation is named a provisional alignment in the specification.

After the above-mentioned drain-drying, an adsorbed molecule was made to react with water by exposing the lower substrate 2002 to an atmosphere including humidity. Thus, an OH group was substituted for an unreacted Cl group of the chemisorbed molecule on the display electrode 2004. This reaction is represented by the following Chemical Formula 7.

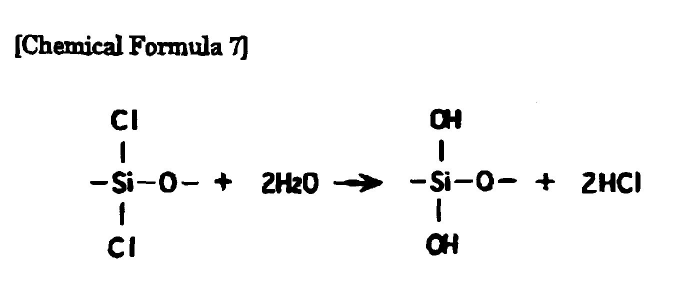

Moreover, the above-mentioned lower substrate 2002 was dried. Thus, a reaction of dehydration represented by the following Chemical Formula 8 was caused. Through the above, the provisional alignment was completed. A thickness of a monomolecular film 226 (refer to Fig. 15(b)) thus formed on the substrate was approximately 1.8 nm.

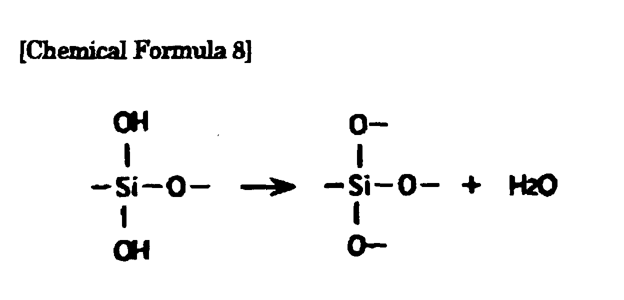

A method of drain-drying is not limited to the above-mentioned method. For instance, the following methods may be adopted: a method of drain-drying in a centrifugal direction by rotating a turntable on which the lower substrate 2002 is laid; and a method of drain-drying by blowing air onto the monomolecular film plane from a certain direction after wetting a monomolecular film with a washing solution.

Next, the step of crosslinking the adsorbed molecule is described. As shown in Fig. 16, the divided area 2006a of the monomolecular film 226 was cut off light by a photomask 286 having a cutoff part 2085. A polarized ultraviolet ray having a polarized direction T (a wavelength of 365 nm, an irradiation intensity of 500W) was irradiated from a direction shown by an arrow U for 45 seconds. Thus, the polarized light was irradiated on the divided area 2006b, and consequently a group of the adsorbed molecules (a group of molecules composing a thin film) in the divided area were inclined in the V' direction and a molecule having a photosensitive group was photopolymerized and crosslinked to each other. The molecule having a photosensitive group was the above-mentioned molecule represented by the Chemical Formula 4, and as represented by the following Chemical Formula 9, this molecule was crosslinked to each other through a bond of carbon- carbon in a photosensitive group part (vinyl group).

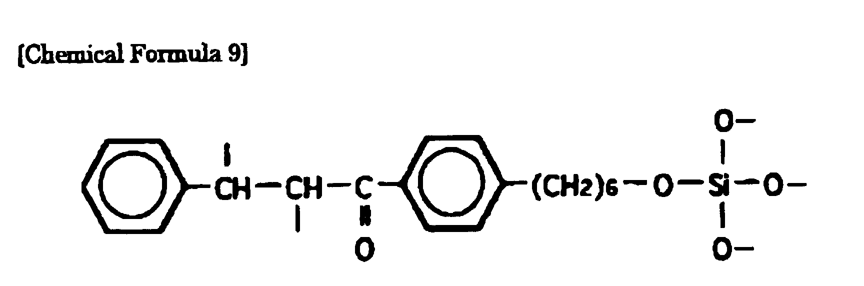

On the other hand, the above-mentioned molecule represented by the Chemical Formula 5 is never photopolymerized because of not having the photosensitive group. Since the above-mentioned molecule represented by the Chemical Formula 4 was crosslinked to each other with inclination, the above-mentioned molecule represented by the Chemical Formula 5 is expected to be inclined similarly under the control of the molecule represented by the Chemical Formula 4. In an extremely thin monomolecular film, an energy quantity of ultraviolet rays necessary for a reaction of photopolymerization is small as compared with a conventional polymer film. Therefore, the time for irradiating ultraviolet rays can be made extremely short.

Again, as shown in Fig. 17(a), after immersing the lower substrate 2002 in the above-mentioned washing solution 2083 and pulling up in a direction of an arrow V' (refer to Fig. 17(a)), the washing solution was drain-dried in a V direction while leaving motionless in this direction for a moment (a drain-drying at the second time). Since a molecule in the area 2006b was crosslinked to each other in an irradiation of light at the first time, its alignment state was stabilized. Accordingly, as shown in Fig. 17 (b), the group of the adsorbed molecules in the divided area 2006b remained inclined in an alignment direction at the first time, namely, the V' direction. Meanwhile, a group of the adsorbed molecules in the divided area 2006a, a cutoff area at the first time, were aligned provisionally again in a drain-drying direction at the second time, namely, the V direction.

Subsequently to the provisional alignment at the second time, as shown in Fig. 18, an ultraviolet ray was irradiated on the divided area 2006a while cutting the divided area 2006b off light by the photomask 286 like the above. Thus, it was possible to photopolymerize a molecule having a photosensitive group in the divided area 2006a to each other and, as shown in Fig. 6, to form the area 2006a having an alignment direction reverse to the alignment direction in the divided area 2006b.

In addition, the alignment layer 2005 wherein the divided areas 2005a, 2005b have an alignment direction reverse to each other was formed on the display electrode 2003 by repeating a similar step to the above with the upper substrate 2001.

Subsequently, an empty cell was constructed by opposing the upper substrate 2001 with the alignment layer 2005 and the lower substrate 2002 with the alignment layer 2006 so that the divided areas 2005a, 2005b correspond to the divided areas 2006a, 2006b respectively (refer to Fig. 13 (b)). Later, the liquid crystal layer 2008 was formed by injecting a liquid crystal material including a nematic liquid crystal into the above-mentioned empty cell, and additionally a liquid crystal display device was obtained by disposing the film retardation plate 2010 and the polarizer 2011 outside the upper substrate 2001 and disposing the polarizer 2012 outside the lower substrate 2002.

According to the above-mentioned manufacturing method, a group of adsorbed molecules are aligned provisionally by a simple method of drain-drying, and later an alignment control characteristic over a liquid crystal is provided for a monomolecular film by a means of irradiating a polarized light. According to this means, since rubbing treatment is not necessary the deterioration on a surface of an alignment layer due to a rubbing stripe does not occur. The alignment control characteristic over a liquid crystal can be changed in each of the different divided areas by irradiating the polarized light selectively on the different divided areas on the monomolecular film with a photomask. Then, since the photomask has only to cut a predetermined divided area of an alignment layer off light, a special work is not necessary for forming a film for cutting off on the monomolecular film. That is, according to the above-mentioned manufacturing method, a multidomain alignment type liquid crystal alignment layer of high quality can be manufactured with a high productivity. On the contrary in the case of manufacturing an alignment layer having a multidomain alignment with a rubbing method, it is necessary to repeat a complicated operation of forming and detaching photoresist (protective film). Then, there is a possibility of damaging the alignment layer physically and chemically.

Next, an action mode of a liquid crystal display device according to Embodiment 2-1 is described.

For instance, a picture signal driving circuit (not shown in figures) for outputting a picture signal is connected with a liquid crystal display device having the above-mentioned constitution. Thus, an image can be displayed on a display screen. In the case of not applying voltage between the display electrodes 2003 and 2004, an initial alignment state of each of the liquid crystal molecules 2007a to 2007d is as follows. That is, as shown in Fig. 13 (b), an alignment of the liquid crystal molecules 2007b and 2007d near the alignment layer 2006 is controlled by the alignment layer 2006, and the liquid crystal molecules 2007b and 2007d are inclined in X and X' directions respectively at a pretilt angle of 88° with the lower substrate plane 2002. The liquid crystal molecules 2007a and 2007c near the alignment layer 2005, like the above, are inclined in Y and Y' directions respectively at a pretilt angle of 88°.

On the other hand, in the case of applying voltage between the display electrodes 2003 and 2004, since an electric field is caused in the liquid crystal layer 2008 in a normal direction of the lower substrate 2002, liquid crystal molecules 2007e and 2007f near the middle of the liquid crystal layer 2008 attempt to transfer to a new alignment state due to the electric field effect. That is, although a direction of a minor axis of the liquid crystal molecules 2007e and 2007f attempts to be parallel with an electric flux line in the above-mentioned electric field, the above-mentioned liquid crystal molecules 2007e and 2007f are inclined in a reverse direction to each other so as to be symmetrical with respect to the boundary plane P because of being affected by the liquid crystal molecules 2007a to 2007d near the alignment layers 2005 and 2006. In other words, an alignment direction of each of the liquid crystal molecules 2007a to 2007d is inclined uniformly in the alignment areas A, B. Accordingly, the transmittance of light changes uniformly in each of the alignment areas A, B, and the alignment areas A, B are areas into which a pixel is divided equally. Even if a display screen is observed from a diagonal direction, the refractive anisotropy of the liquid crystal molecule is averaged, and consequently a viewing angle characteristic is improved.

A liquid crystal display device in Embodiment 2-1 based on the above-mentioned principle had a display contrast ratio of approximately 300, a viewing angle of ±70° and a response speed of approximately 20ms. A conventional liquid crystal display device of a twisted nematic (TN) mode using a nematic liquid crystal with a positive dielectric anisotropy has a response speed of approximately 50ms. Judging from this, according to the present invention, it is proved that a liquid crystal display device of a homeotropic alignment mode having a high-speed response, a high contrast and a wide viewing angle can be provided.

### (Embodiment 2-2)

Embodiment 2-2 according to the present invention is described, based on Figs. 19 to 22. As regards a component having a similar function to a device in the above-mentioned Embodiment 2-1, a detailed description is omitted by giving the same number to the above-mentioned Figs.

An active matrix type liquid crystal display device according to Embodiment 2-2 and a liquid crystal display device according to the above-mentioned Embodiment 2-1 are different in the number of divisions of a pixel. A pixel is divided into four parts in the device in Embodiment 2-2. Specifically, as shown in Fig. 19, an area of a liquid crystal layer 2018 corresponding to a pixel is divided equally into four liquid crystal alignment areas C to F. A liquid crystal molecule in the liquid crystal alignment area C and a liquid crystal molecule in the liquid crystal alignment area E are aligned with inclination in a reverse direction to each other, and a liquid crystal molecule in the liquid crystal alignment area D and a liquid crystal molecule in the liquid crystal alignment area F are aligned with inclination in a reverse direction to each other. A pretilt angle of a liquid crystal molecule in the liquid crystal alignment areas C to F is the same. In Fig. 19 (a), X is an alignment direction of a liquid crystal molecule in the liquid crystal alignment area C, Y is an alignment direction of a liquid crystal molecule in the liquid crystal alignment area D, X' is an alignment direction of a liquid crystal molecule in the liquid crystal alignment area E, and Y' is an alignment direction of a liquid crystal molecule in the liquid crystal alignment area F.

Meanwhile, in the alignment layers 2005 and 2006, divided areas 2005c, 2005d, 2005e and 2005f (the alignment layer 2005) and divided areas 2006c, 2006d, 2006e and 2006f (the alignment layer 2006) are formed correspondingly to the liquid crystal alignment areas C to F in order to form the liquid crystal alignment areas C to F. These divided areas are different in an inclined direction (a direction of aligning a molecule) of a molecule composing the alignment layer.

Next, a method of manufacturing a liquid crystal display device according to Embodiment 2-2 is described.

First, like the above-mentioned Embodiment 2-1, after chemisorbing a silane-based molecule on the display electrode 2004 of the lower substrate 2002 through a film of SiO₂, the silane-based chemical adsorbate which does not react was removed by immersing in the washing solution 2083 to wash, and the lower substrate 2002 was pulled up in a reverse direction to X direction shown in Fig. 19 (a) to drain-dry the washing solution while keeping in this direction. Later, a hydroxyl group was substituted for an unreacted Cl group of the silane-based molecule by exposing to an atmosphere including humidity. Next, an ultraviolet ray having a polarized direction parallel with the X direction was irradiated on the divided area 2006c while cutting the divided areas 2006d to 2006f off light by the photomask 2086 having the cutoff part 2085. Thus, a group of molecules belonging to the divided area 2006c were fixed with inclination in the X direction.

The lower substrate 2002 with an alignment layer, wherein a group of molecules belonging to the divided areas 2006d, 2006e and 2006f were fixed with inclination in the directions Y, X' and Y' respectively, was manufactured by executing the same step (except the steps of chemisorbing and substituting for an unreacted Cl group) as the case of the divided area 2006c to each of the above-mentioned divided areas 2006d to 2006f which were cut off light by the photomask 2086.

The substrate 2002 with an alignment layer having the divided areas 2005c to 2005f, in which an inclined direction of a group of molecules is different, was manufactured similarly to the lower substrate 2002.

Subsequently, the upper substrate 2001 with an alignment layer and the lower substrate 2002 with an alignment layer were stuck with a predetermined gap, and later a liquid crystal cell was formed by injecting a liquid crystal material into the gap (the liquid crystal layer 2018). Furthermore, a liquid crystal display device was obtained by providing the film retardation plate 2010 and the polarizer 2011 outside the upper substrate 2001 and providing the polarizer 2012 outside the lower substrate 2002 (refer to Fig. 19(b)).

According to Embodiment 2-2, it is possible to manufacture four divided pixels, into which a pixel is divided, without executing rubbing treatment and photolithography process. Thus, it is possible to obtain a liquid crystal display device of a homeotropic alignment division, wherein a viewing angle on a display screen is widened up ad down as well as right and left.

### [Supplementary matters in Embodiment 2-2]

A liquid crystal alignment area in a pixel can be provided in larger numbers, and for instance, as shown in Fig. 20, a liquid crystal area corresponding to a pixel can be divided into eight parts to form alignment areas a to h. Also in the case of dividing a liquid crystal area into eight parts in this manner, it is preferable to use a method of repeating a drain-drying and an irradiation of a polarized light. When a liquid crystal area in a pixel is divided into eight alignment areas, a liquid crystal display device having an extremely excellent viewing angle characteristic can be obtained.

In the above-mentioned Embodiment 2-2, a drain-drying direction and a polarized direction were made different by the number of liquid crystal alignment area into which a pixel is divided, while the number of the steps of manufacturing can be decreased by devising a drain-drying direction as described below. That is, first a drain-drying is executed in Z direction shown in Fig. 21 (a drain-drying at the first time). Thus, a group of molecules composing a monomolecular film are inclined in the Z direction. Subsequently, an unreacted molecule of the monomolecular film is made to react with water by exposing to an atmosphere including humidity. Later, an ultraviolet ray having a polarized direction parallel with X direction is irradiated on a divided area c (corresponding to an alignment area C in Fig. 21), and an ultraviolet ray having a polarized direction parallel with Y direction is irradiated on an area d (corresponding to an alignment area D). Thus, a group of molecules belonging to the areas c and d are crosslinked to each other with inclination in the directions X and Y respectively. Next, a drain-drying is executed in Z' direction. Later, an ultraviolet ray having a polarized direction parallel with X' direction is irradiated on a divided area e (corresponding to an alignment area E in Fig. 21), and an ultraviolet ray having a polarized direction parallel with Y' direction is irradiated on an area f (corresponding to an alignment area F). Thus, a group of molecules belonging to the areas e and f are crosslinked to each other with inclination in the directions X' and Y' respectively. According to this method, since four divided areas can be formed by two drain-dryings, the manufacturing efficiency is raised all the more.

In addition, it is preferable to divide a liquid crystal area into four parts by two diagonal lines as shown in Fig. 22, in view of simplifying the manufacturing process. A manufacturing method in this case is described simply below. After drain-drying divided areas a and b of an alignment layer in Z direction, an ultraviolet ray having a polarized direction parallel with directions Y ad X' is irradiated on the divided areas a ad b respectively. On the other hand, after drain-drying divided areas c and d in Z' direction, an ultraviolet ray having a polarized direction parallel with directions X and Y' is irradiated on the divided areas c and d respectively. Thus, as shown in Fig. 22, it is possible to obtain an alignment layer wherein an area corresponding to a pixel is divided into four parts. According to this method, since four divided areas can be formed by two drain-dryings without requiring a drain-drying in each divided area, the manufacturing efficiency is raised, and additionally it is possible to actualize a liquid crystal display device having an excellent viewing angle characteristic from a diagonal direction.

### (Embodiment 2-3)

Embodiment 2-3 of the present invention is described, based on Fig. 23. Like Embodiment 2-2, as regards a component having a similar function to a liquid crystal display device in the above-mentioned Embodiment 2-1, a detailed description is omitted by giving the same number.

As shown in Fig. 23, an active matrix type liquid crystal display device according to Embodiment 2-3 is different from a liquid crystal display device according to the above-mentioned Embodiment 2-1 in providing a switching element 2009 on the lower substrate 2002. Each component except the switching element 2009 was manufactured similarly to the above-mentioned Embodiment 2-1.

The switching element 2009 is an element for controlling ON/OFF of a voltage applied to the display electrode 2004, such as TFT (Thin Film Transistor) enabling an active matrix drive. A method of forming such the switching element 2009 as TFT is not particularly limited, and various publicly known methods have been adopted conventionally.

A display characteristic of a device in Embodiment 2-3 using TFT as the switching element 2009 was as follows. When the switching element 2009 was made OFF (voltage was not applied between the display electrodes 2003 and 2004), each of the liquid crystal molecules 2007a to 2007d near the alignment layers 2005 and 2006 in alignment areas G and H was symmetrical with respect to the boundary plane P and was inclined in a reverse direction to each other at a pretilt angle of 88°. The liquid crystal molecules 2007e and 2007f were symmetrical with respect to the boundary plane P and were inclined in a reverse direction to each other because of being affected by the liquid crystal molecules 2007a to 2007d. Meanwhile, when the switching element 2009 was made ON (voltage was applied between the display electrodes 2003 and 2004), a major axis of each liquid crystal molecule was aligned in a direction vertical to the normal direction due to an electric field caused in a normal direction of a substrate plane.

When a display contrast ratio, a viewing angle and a response speed were examined, they were approximately 300, ±70° and approximately 20 ms respectively.

The reason why a wide viewing angle is obtained is as follows: each of the liquid crystal molecules 2007a to 2007d is inclined uniformly in each of the alignment areas G, H, and the transmittance of light changes uniformly in each of the alignment areas G,H; and consequently the refractive anisotropy of the liquid crystal molecule is averaged. The reason why an excellent display contrast ratio is obtained is that an alignment layer for controlling an alignment of a liquid crystal molecule is excellent in the order of an alignment. The reason why a high response speed is obtained is to adopt a display mode wherein a liquid crystal molecule is aligned approximately vertically to a substrate under no application of voltage by using the above-mentioned alignment layer, and is aligned and rearranged in a direction of cutting off light transmission under an application of voltage.

According to a constitution described in Embodiment 2-3, a liquid crystal molecule can be driven independently in each pixel by the switching element 2009. Therefore, the number of pixels and pay scales can be increased, and an image display in full color with a high minuteness can be actualized.

### (Embodiment 2-4)

Embodiment 2-4 of the present invention is described, based on Fig. 24. Like the above, as regards a component having a similar function to a liquid crystal display device in the above-mentioned Embodiment 2-3, a detailed description is omitted by giving the same number.

As shown in Fig. 24, an active matrix type liquid crystal display device according to Embodiment 2-4 is different from a liquid crystal display device according to the above-mentioned Embodiment 2-1 in providing the switching element 2009 and a flattening film 2061 on the lower substrate 2002, and different from a liquid crystal display device according to the above-mentioned Embodiment 2-3 in providing a flattening film 2061. A characteristic part in a device according to Embodiment 2-4 is described below.

The above-mentioned flattening film 2061 is provided for the lower substrate 2002 with the switching element 2009, and additionally a contact hole 2070 is provided on the flattening film 2061. The switching element 2009 and the display electrode 2004 are connected electrically through the contact hole 2070. The significance of such a constitution is as follows.

Some irregularities, dirt and scratches occasionally exist on a surface of the lower substrate 2002 as a member (before adding another component), and the surface of the lower substrate 2002 becomes irregular after forming the switching element 2009 and a wiring pattern (not shown in figures). Consequently, if the display electrode 2004 is formed directly on the lower substrate 2002, the display electrode 2004 becomes uniform with difficulty and irregularities occur on the display electrode 2004 as well. Then, Embodiment 2-4 employs a constitution in which the display electrode 2004 is formed after flattening the substrate plane by forming the flattening film 2061 on the lower substrate 2002 with the switching element 2009. According to this constitution, the distortion of electric field (a lateral electric field) near the switching element 2009 can be prevented in the case of applying voltage between the display electrodes 2003 ad 2004, and such an alignment defect does not occur that a liquid crystal molecule near the switching element 2009 is inclined in a reverse direction. Since the flat display electrode plane 2004 can be formed, a cell gap is equal over the whole surface of a liquid crystal layer, and as a result, the occurrence of display unevenness is reduced.

A cell gap has been conventionally determined with extra space in consideration of irregularities on a surface of the lower substrate 2002 and the distortion of electric field near the switching element 2009. However, because of providing the above-mentioned flattening film 2061, the above-mentioned irregularities on a surface of the lower substrate 2002 are covered and it is unnecessary to provide the extra space for the cell gap, and thereby the cell gap can be made narrower. Consequently, since an electric field acting on a liquid crystal layer 228 becomes intense, the reduction of power consumption can be intended and the response speed can be improved.

A liquid crystal display device according to Embodiment 2-4 is obtained by executing the same step as the above-mentioned Embodiment 2-3 except the steps of coating the flattening film 2061 and forming the contact hole 2070. Then, a material of the flattening film 2061 is not particularly limited and it is preferred that the material is an electrical insulator. Various publicly known materials have been used conventionally. Specifically, silicon dioxide (SiO₂), polymer resin and the like can be used. The above-mentioned flattening film 2061 can be formed by an applying method, a bias sputtering method, a reflowing method, an etch back method, a lift-off method and the like, while the above-mentioned contact hole 2070 can be formed by such various publicly known conventional methods as photolithography process.

Since the contact hole 2070 is provided for the flattening film 2061 and additionally the switching element 2009 and the display electrode 2004 are connected electrically through the contact hole 2070, an application of voltage to the display electrode 2004 can be controlled by the switching element 2009. Although an action mode of an active matrix type liquid crystal display device according to Embodiment 2-4 is basically the same as the above-mentioned Embodiment 2-3, the device had a higher response speed than the above-mentioned Embodiment 2-3, which was shown by the following result: a display contrast ratio, a viewing angle and a response speed were approximately 300, ±70° and approximately 10ms respectively when the characteristics of the device were examined.

Like the above, according to a constitution described in Embodiment 2-4, a liquid crystal display device having an extremely excellent response can be made compared with the above-mentioned Embodiment 2-3.

### (Embodiment 2-5)

Embodiment 2-5 of the present invention is described, based on Fig. 25 (a cross sectional view of a liquid crystal display device) and Fig. 26 (Fig. 25 observed from a vertical direction to a substrate). Fig. 26 is a partial cutaway plan view for describing a correspondence relation of display electrodes 203 and 2074. As regards a component having a similar function to a liquid crystal display device in the above-mentioned Embodiment 2-3, a detailed description is omitted by giving the same number.

As shown in Figs. 25 and 26, an active matrix type liquid crystal display device according to Embodiment 2-5 is different from a liquid crystal display device (refer to Fig. 23) according to the above-mentioned Embodiment 2-3 in substituting the display electrode 2074 having an aperture 2074c for the display electrode 2004 on the side of the lower substrate 2002.

The above-mentioned display electrode 2074 is divided into an area 2074a and an area 2074b so that the areas are equal through the aperture 2074c in a slit with a gap of 10 µm, and the area 2074a and the area 2074b are equal correspondingly to the divided areas 2005a, 2006a and the divided areas 2005b, 2006b respectively. Moreover, a liquid crystal layer 238 is divided into alignment areas K and L correspondingly.

A liquid crystal display device according to Embodiment 2-5 having such a characteristic was manufactured by executing the same step as the above-mentioned Embodiment 2-3 except for adding the step of forming the aperture 2074c by patterning a transparent electrode made of ITO with etching.

Next, an action mode in a device according to Embodiment 2-5 is described.

In a liquid crystal display device having the above-mentioned constitution, not merely an alignment control force of the alignment layers 2005 and 2006 but also an effect by the aperture 2074c, namely, an alignment control force by an electrode fringe electric field (an arrow in Fig. 25) acts on a liquid crystal molecule near the alignment layers 2005 and 2006. Accordingly, a liquid crystal molecule in the liquid crystal alignment areas K and L is aligned in a reverse direction to each other even more certainly. Further details are described below. When the switching element 2009 is made OFF (in the case of not applying voltage between the display electrodes 2003 and 2074), each of the liquid crystal molecules 2007a to 2007d in the liquid crystal alignment areas K and L is symmetrical with respect to the boundary plane P and is inclined in a reverse direction to each other. Meanwhile, when the switching element 2009 is made ON (in the case of applying voltage between the display electrodes 2003 and 2074), an electrode fringe electric field, wherein an electric flux line O is symmetrical with respect to the boundary plane P and is inclined in a reverse direction to each other, is formed near the aperture 2074c and near ends 2003a and 2003b of the display electrode 2003. Since each of the liquid crystal molecules 2007a to 2007d has a negative dielectric anisotropy, liquid crystal molecules 2007g and 2007h near the aperture 2074c as well as the liquid crystal molecules 2007a and 2007c near the ends 2003a and 2003b are inclined so that a direction of a minor axis of the liquid crystal molecules 2007a, 2007c, 2007g and 2007h as parallel with the electric flux line O in the above-mentioned electrode fringe electric field. That is, each of the above-mentioned liquid crystal molecule 2007a, 2007c, 2007g and 2007h is further inclined certainly and promptly in a symmetrical direction with respect to the boundary plane P under a great influence of the alignment control force by the above-mentioned electrode fringe electric field.

Therefore, in a device according to Embodiment 2-5, an alignment state of a liquid crystal molecule changes greatly and smoothly by ON/OFF of an electric field. As a result, the device showed such an excellent display performance as a response speed of approximately 15 ms, a display contrast ratio of approximately 300 and a viewing angle of ±70°.

### [Supplementary matters in Embodiment 2-5]

In a device having the above-mentioned constitution, like the above-mentioned Embodiment 2-4, the above-mentioned flattening film 2061 can be formed on the lower substrate 2002 with the switching element 2009. According to this constitution, since an effect by narrowing a cell gap is added besides an effect by an electrode fringe electric field, a device having an even higher response speed can be actualized.

A different voltage from each other may be applied by substituting two or more separated display electrodes for the display electrode 2074 which is divided into the area 2074a and the area 2074b through the aperture 2074c as described above. Thus, it is possible to enlarge a viewing angle and to obtain various unsymmetrical viewing angle characteristics easily; for instance, a viewing angle of a display screen observed from an upper diagonal direction is made wider than that of a lower diagonal direction. In order to apply a different voltage to each display electrode, for instance, it is preferred to connect each display electrode through a predetermined supplementary capacity and to provide an independent picture signal by connecting a switching element with each display electrode. In the latter case, a viewing angle can be regulated desirably by controlling the voltage of each picture signal.

A predetermined gap was provided for the display electrode 2074 on the lower substrate 2002 in the above-mentioned Embodiment 2-5, while a predetermined gap may be provided for the display electrode 2003 on the upper substrate 2001 to obtain a divided electrode.

Furthermore, Embodiment 2-5 adopts a structure of providing the switching element 2009, while an idea described in Embodiment 2-5 is not limited to this structure and can be applied to a simple matrix type liquid crystal display device.

### (Other supplementary matters)

In each of the above-mentioned Embodiments, a mixture of two kinds of molecules represented by the above-mentioned Chemical Formula 4 (molecule A) and Chemical Formula 5 (molecule B) was used as a silane-based chemical adsorbate. Instead of these molecules, it is possible to use a kind of molecule comprising a fluorocarbon group as an end group, a photosensitive group, a linear carbon chain ad/or a linear siloxane combined chain, and a functional group including a silicon atom, and to use a mixture of two or more kinds of molecules comprising these functional groups. Thus, since all precursor molecules composing a thin film have a photosensitive group, all molecules can be crosslinked to each other and an extreme stable structure of alignment can be formed. A desirable pretilt angle can be provided by changing the design of such functional groups as a linear carbon chain and/or a linear siloxane combined chain.

In each of the above-mentioned Embodiments, a transmission type liquid crystal display device was described as an example, and additionally the present invention can be applied to a reflection type liquid crystal display device. Specifically, the present invention can be applied by using such a reflective metallic material as aluminum (Al) for one of the display electrodes 2003 and 2004 (or 2074). In this case, a silane-based molecule can be chemisorbed easily by executing an irradiation of ultraviolet rays and an asher in an atmosphere of ozone on a surface of the display electrode. In addition, a silane-based molecule can be chemisorbed easily by using a reflective substrate including Si for one of the upper substrate 2001 and the lower substrate 2002. On the other hand, a reflection type liquid crystal display device can be made by means of providing a reflector outside a liquid crystal display device according to the above-mentioned Embodiments.

Moreover, in each of the above-mentioned Embodiments, such a mode was described that the alignment layers 2005 and 2006 were formed on the display electrodes 2003 and 2004 through a film of SiO₂. A hydrophilic polymer like polyvinyl alcohol and gelatin may be substituted for the above-mentioned film of SiO₂. A method of applying may be used as a method of forming a polyvinyl alcohol film and a gelatin film. Furthermore, in the present invention, it is preferable to determine a pretilt angle θp of the liquid crystal molecule at 80° ≦ θp<90° , more preferably 85° ≦θp<90° , in terms of aligning a liquid crystal molecule more certainly and obtaining a liquid crystal display device having a high contrast, excellent response and viewing angle characteristic.

Moreover, in the above-mentioned Embodiment, such a mode was described that a liquid crystal area was divided into equal alignment areas, and each alignment area can be made unequal. In addition, each alignment area into which a liquid crystal area is divided can be made unequal by changing the disposal of the film retardation plate 2010. Thus, such a desirable viewing angle characteristic can be provided that a viewing angle is enlarged unsymmetrically.

In addition, needless to say, a wavelength of a polarized light irradiated on a thin film plane is not limited to 365 nm, and it is preferred to determine the wavelength and intensity of the polarized light appropriately according to the character of a molecule composing the thin film. The number of times in irradiating is not limited to one, and the polarized light may be irradiated with the division into a plurality of times correspondingly to the character of the molecule composing the thin film. Not merely the polarized light but also an unpolarized ultraviolet ray may be irradiated. Furthermore, in the above-mentioned Embodiments 2-1 and 2-3 to 2-5, a polarized light was irradiated for the purpose of fixing an alignment direction of a molecule composing an alignment layer in a drain-drying direction (that is, a provisional alignment direction). In this case, an unpolarized ultraviolet ray may be substituted for the polarized light. The reason is to complete such a purpose that a group of adsorbed molecules are crosslinked with inclination in the drain-drying direction to raise the stability of alignment since a reaction of polymerization is caused to form a structure of crosslinking by an irradiation of the unpolarized ultraviolet ray. However, it is preferable to use the polarized light having a polarized direction parallel with the drain-drying direction because of controlling the alignment direction of the adsorbed molecule more certainly.

Moreover, in the above-mentioned Embodiments 2-3 to 2-5, like the above-mentioned Embodiment 2-2, it is possible to divide a liquid crystal area in a pixel, and thus to improve a viewing angle characteristic of a display screen further.

As described above, according to the second invention group, a multidomain type liquid crystal display device of a homeotropic alignment mode can be actualized without executing rubbing treatment and photolithography process.

### INDUSTRIAL APPLICABILITY

As described above, according to the present invention, a liquid crystal alignment layer, which is noticeably thin and uniform without any alignment unevenness, can be provided compared with a conventional liquid crystal alignment layer of an organic polymer. The liquid crystal alignment layer comprises a thin film in a monolayer, and a group of molecules composing the thin film are bonded and fixed firmly on a surface of a display electrode by chemisorption, and the molecule composing the thin film is structured so as to be crosslinked to each other. Therefore, an alignment of the molecule composing the thin film does not vary with such outer factors as heat and rubbing. In addition, since the alignment layer has a structure wherein each molecule of the group of molecules composing the thin film is arrayed in a monolayer so as to be involved in controlling an alignment of a liquid crystal molecule, a noticeably excellent alignment control force is exhibited.
According to a manufacturing method of the present invention, a multidomain type liquid crystal alignment layer having a different alignment direction in each patterned divided section can be manufactured certainly and efficiently by a comparatively simple means of drain-drying and irradiating a polarized light. Furthermore, a multidomain type liquid crystal display device of a homeotropic alignment mode, which has a wide viewing angle, a high image quality, a high contrast and an excellent high-speed response, can be actualized by using such a liquid crystal alignment layer according to the present invention. Therefore, the industrial significance of a series of the present invention is great.

## Claims

**1**. A liquid crystal alignment layer comprising:
a thin film in a monolayer on a surface of a substrate with a display electrode;
wherein:
a molecule composing the thin film is bonded chemically on the surface of a substrate an its end; and
the molecule composing the thin film is polymerized to each other in a state in which an inclination and/or an alignment direction of a major axis of the molecule to the substrate plane are different in each area on the thin film plane.

**2**. A liquid crystal alignment layer according to Claim 1, wherein:
said thin film is formed by chemisorbing a chemical adsorbate comprising a photosensitive group, a silicon, and a linear carbon chain or a linear siloxane combined chain on a surface of a substrate, and crosslinking a chemical adsorbate molecule to each other at the photosensitive group part.

**3**. A liquid crystal alignment layer according to Claim 2, wherein:
said molecule composing a thin film has a silicon at its end.

**4**. A liquid crystal alignment layer according to Claim 3, wherein:
said thin film is composed of a plurality of kinds of molecules with a different length of a major axis of the molecule; and
said plurality of kinds of molecules are bonded with a mixture of them to a surface of a substrate.

**5**. A liquid crystal alignment layer according to Claim 4, wherein:
said plurality of kinds of molecules with a different length of a major axis of the molecule are different in a length of a linear carbon chain or a linear siloxane combined chain in a structure of the molecule.

**6**. A liquid crystal alignment layer according to Claim 1, wherein:
said each area is a plurality of patterned areas into which a section corresponding to a pixel is divided.

**7**. A liquid crystal alignment layer according to Claim 6, wherein:
said thin film is formed by chemisorbing a chemical adsorbate comprising a photosensitive group, a silicon, and a linear carbon chain or a linear siloxane combined chain on a surface of a substrate, and crosslinking a chemical adsorbate molecule to each other at the photosensitive group part.

**8**. A liquid crystal alignment layer according to Claim 7, wherein:
said molecule composing a thin film has a silicon at its end.

**9**. A liquid crystal alignment layer according to Claim 8, wherein:
said thin film is composed of a plurality of kinds of molecules with a different length of a major axis of the molecule; and
the plurality of kinds of molecules are bonded with a mixture of them to a surface of a substrate.

**10**. A liquid crystal alignment layer according to Claim 9, wherein:
said plurality of kinds of molecules with a different length of a major axis of the molecule are different in a length of a linear carbon chain or a linear siloxane combined chain in a structure of the molecule.

**11**. A method of manufacturing a liquid crystal alignment layer comprising the steps of:
forming a thin film in a monolayer by contacting a chemisorption solution including a silane-based chemical adsorbate, comprising a photosensitive group and a linear carbon chain or a linear siloxane combined chain, and a nonaqueous organic solvent on a substrate plane with a display electrode, and chemisorbing a chemical adsorbate molecule in the chemisorption solution on the substrate plane; and
providing an alignment comprising the steps of:
aligning a molecule composing the thin film in a certain direction provisionally by drain-drying the washing solution while setting up the substrate in a certain direction after washing said thin film in a monolayer with a washing solution comprising a nonaqueous organic solvent; and
crosslinking the molecule composing the thin film to each other in a particular direction by irradiating a patterned polarized light having a different polarized direction on the provisionally aligned thin film plane.

**12**. A method of manufacturing a liquid crystal alignment layer according to Claim 11, wherein:
a mixture of two or more kinds of silane-based compounds is used as said silane-based chemical adsorbate.

**13**. A method of manufacturing a liquid crystal alignment layer according to Claim 12, wherein:
a mixture of two or more kinds of silane-based compounds with a different length of a major axis of a molecule is used as said two or more kinds of silane-based compounds.

**14**. A method of manufacturing a liquid crystal alignment layer according to Claim 13, wherein:
an inclination of a molecule with a longest major axis to a substrate is controlled by changing a mixture ratio of said two or more kinds of silane-based compounds as said silane-based chemical adsorbate; and
desirable pretilt angle and/or pretilt direction are provided for a liquid crystal alignment layer.

**15**. A method of manufacturing a liquid crystal alignment layer according to Claim 13, wherein:
an inclination of a molecule with a longest major axis to a substrate is controlled by changing a length of a molecule with a short major axis in comparison with each other without changing a mixture ratio of said two or more kinds of silane-based compounds; and
desirable pretilt angle and/or pretilt direction are provided for a liquid crystal alignment layer.

**16**. A method of manufacturing a liquid crystal alignment layer according to Claim 11, wherein:
a compound comprising a photosensitive group; one or more chain among a group consisting of a linear carbon chain and a linear siloxane combined chain; and one or more organic group among a group consisting of a chlorosilyl group, an alkoxysilyl group and an isocyanatosilyl group is used as said silane-based chemical adsorbate.

**17**. A method of manufacturing a liquid crystal alignment layer according to Claim 16, wherein:
a mixture of two or more kinds of said compounds, wherein a length of a molecule is made different by changing a length of one or more chain among a group consisting of a linear carbon chain and a linear siloxane combined chain, is used as said silane-based chemical adsorbate.

**18**. A method of manufacturing a liquid crystal alignment layer according to Claim 16, wherein:
an inclination of a molecule with a longest major axis to a substrate is controlled by changing a mixture ratio of two or more kinds of said compounds and/or controlling a length of a molecule of each compound; and
a desirable liquid crystal alignment characteristic is provided for a liquid crystal alignment layer.

**19**. A method of manufacturing a liquid crystal alignment layer according to Claim 16, wherein:
a solvent including at least one organic group among a group consisting of an alkyl group, a fluorocarbon group, a chlorocarbon group and a siloxane group is used as a nonaqueous organic solvent.

**20**. A method of manufacturing a liquid crystal alignment layer according to Claim 16, wherein:
said compound comprises, at an end or a part of said linear carbon chain or linear siloxane combined chain, at least one organic group among a group consisting of a carbon trifluoride group (―CF₃), a methyl group (―CH₃), a vinyl group (―CH=CH₂), an allyl group (―CH=CH―), an acetylene group (triple bond: ―C≡C―), a phenyl group (―C₆H₅), an aryl group (―C₆H₄―), a halogen atom, an alkoxy group (―OR; R is an alkyl group), a cyano group (― CN), an amino group (― NH₂), a hydroxyl group (―OH), a carbonyl group (=CO), an ester group (―COO ―) and a carboxyl group (―COOH).

**21**. A method of manufacturing a liquid crystal alignment layer according to Claim 20, wherein:
an inclination of a molecule with a longest major axis to a substrate is controlled by changing a mixture ratio of two or more kinds of said compounds and/or controlling a length of a molecule of each compound; and
a desirable liquid crystal alignment characteristic is provided for a liquid crystal alignment layer.

**22**. A method of manufacturing a liquid crystal alignment layer according to Claim 20, wherein:
a mixture of two or more kinds of said compounds, wherein a length of a molecule is made different by changing a length of one or more chain among a group consisting of a linear carbon chain and a linear siloxane combined chain, is used as said silane-based chemical adsorbate.

**23**. A method of manufacturing a liquid crystal alignment layer according to Claim 20, wherein:
a solvent including at least one organic group among a group consisting of an alkyl group, a fluorocarbon group, a chlorocarbon group and a siloxane group is used as a nonaqueous organic solvent.

**24**. A method of manufacturing a liquid crystal alignment layer according to Claim 11, wherein:
said step of crosslinking is the step of changing an inclination and/or an alignment direction of a molecule composing a thin film to a substrate plane in each of a plurality of patterned divided sections of an alignment layer, into which a section corresponding to a pixel is divided, by irradiating a polarized light two or more times, with a different polarized direction and a different irradiation area in each irradiation, on a provisionally aligned thin film plane in said step of aligning provisionally.

**25**. A method of manufacturing a liquid crystal alignment layer according to Claim 11, wherein:
said step of providing an alignment is:
the step of repeating two or more times a series of steps comprising:
a first alignment step of aligning a molecule composing the thin film in a certain direction provisionally by drain-drying the washing solution while setting up a substrate in a certain direction after washing a thin film in a monolayer with a washing solution comprising a nonaqueous organic solvent; and
a second alignment step of irradiating a polarized light having a polarized direction approximately parallel with a provisional alignment direction in said first alignment step; and
the step of changing an inclination and/or an alignment direction of a major axis of the molecule composing the thin film to a substrate plane in each of a plurality of patterned divided sections of an alignment layer, into which a section corresponding to a pixel is divided, by making a drain-drying direction at an N-th time (N is an integer of 2 or more) differ from a drain-drying direction at a first time through an [N―1]-th time as well as making an irradiation area on the substrate in an irradiation of a polarized light at an N-th time subsequently to a drain-drying at an N-th time differ from an irradiation area at a first time through an [N―1]-th time.

**26**. A method of manufacturing a liquid crystal alignment layer according to Claim 11, wherein:
a step of forming a preparation layer comprising an SiOH group on a substrate plane is added before said step of forming a thin film.

**27**. A liquid crystal display device comprising:
at least a pair of opposite substrates;
a liquid crystal alignment layer on a surface of at least a substrate with a display electrode of said pair of substrates; and
a liquid crystal accommodated in a cell gap between said pair of opposite substrates;
wherein:
said liquid crystal alignment layer is a thin film in a monolayer which is formed by bonding a chemical adsorbate molecule to the surface of a substrate and crosslinking the chemical adsorbate molecule to each other;
an inclination and/or an alignment direction of a major axis of the adsorbate molecule to a substrate plane are different in each of patterned divided sections of the alignment layer into which a pixel is divided; and
a pretilt angle and/or a pretilt direction of a liquid crystal molecule accommodated in said cell gap are controlled by said inclination and/or alignment direction of a major axis of the adsorbate molecule to a substrate plane.

**28**. A liquid crystal display device according to Claim 27, wherein:
a liquid crystal accommodated between said pair of opposite substrates is a nematic liquid crystal; and
said cell gap is determined so that a liquid crystal molecule is aligned twistedly at an angle of 90° or 180° through 270°.

**29**. A liquid crystal display device according to Claim 27, wherein:
said liquid crystal display device is an in-plane switching type liquid crystal display device in which a pair of display electrodes is formed on a substrate plane.

**30**. A method of manufacturing a liquid crystal display device comprising at least the steps of:
forming a thin film in a monolayer by contacting a chemisorption solution including a silane-based chemical adsorbate, comprising a photosensitive group and a linear carbon chain or a linear siloxane combined chain, and a nonaqueous organic solvent on a substrate plane with a display electrode, and chemisorbing a chemical adsorbate molecule in said chemisorption solution at an end in a direction of a major axis of the molecule on the substrate plane;
aligning a molecule composing the thin film in a certain direction provisionally by drain-drying the washing solution while setting up a substrate in a certain direction after washing said thin film in a monolayer with a washing solution comprising a nonaqueous organic solvent;
providing an alignment by irradiating a patterned polarized light having a different polarized direction on a provisionally aligned thin film plane, crosslinking the chemical adsorbate molecule to each other, and forming a substrate with a liquid crystal alignment layer, in which an inclination and/or an alignment direction of a major axis of the molecule composing the thin film to the substrate plane are different; and
forming a liquid crystal cell by disposing a liquid crystal between both substrates after opposing said substrate with a liquid crystal alignment layer and an opposite substrate with at least an opposite electrode, through a surface with an electrode, with a predetermined cell gap.

**31**. A method of manufacturing a liquid crystal display device according to Claim 30, wherein:
a nematic liquid crystal is used as a liquid crystal disposed between said both substrates; and
an inclination and/or an alignment direction of a major axis of a molecule composing said thin film to a substrate plane, and a cell gap are constructed so that a liquid crystal molecule is aligned twistedly at an angle of 90° or 180° through 270°.

**32**. A liquid crystal display device comprising:
a pair of substrates with a display electrode inside each of them;
a liquid crystal alignment layer on an inside of at least one of said pair of substrates;
a liquid crystal layer including a liquid crystal with a negative dielectric anisotropy disposed in a gap between said pair of substrates; and
a polarizer disposed outside said pair of substrates;
wherein:
a liquid crystal molecule of said liquid crystal layer is aligned approximately vertically to the substrate under no application of a voltage;
said liquid crystal alignment layer is a thin film in a monolayer in which a chemical adsorbate including a compound having a photosensitive group is bonded directly or through a preparation layer to a substrate plane at an end of a major axis of a molecule, and a molecule having at least the photosensitive group is crosslinked to each other in a particular direction at the photosensitive group part; and
an inclination and/or an alignment direction of a molecule composing said thin film to the substrate are different in each of divided sections of the alignment layer into which a pixel is divided with a predetermined pattern.

**33**. A liquid crystal display device according to Claim 32, wherein:
a pretilt angle and/or a pretilt direction of a liquid crystal molecule of said liquid crystal layer are controlled by an inclination and/or an alignment direction of a molecule composing said thin film to a substrate.

**34**. A liquid crystal display device according to Claim 33, wherein:
an inclination and/or an alignment direction of a molecule composing a thin film in adjacent divided sections of an alignment layer are symmetrical to their respective counterparts with respect to a boundary plane between said adjacent divided sections of an alignment layer.

**35**. A liquid crystal display device according to Claim 34, wherein:
said compound having a photosensitive group is a compound having a photosensitive group, a linear carbon chain and/or a linear siloxane combined chain, and a functional group including a silicon atom.

**36**. A liquid crystal display device according to Claim 35, wherein:
said thin film comprises a molecule with a repellency, or two or more kinds of molecules including a molecule with a repellency.

**37**. A liquid crystal display device according to Claim 36, wherein:
said molecule with a repellency is a molecule having a fluorocarbon group as an end group.

**38**. A liquid crystal display device according to Claim 37, wherein:
said molecule having a fluorocarbon group as an end group has further a linear carbon chain and/or a linear siloxane combined chain, and a functional group including a silicon atom.

**39**. A liquid crystal display device according to Claim 33, wherein:
a switching element for controlling a voltage applied to a display electrode is provided for one of said pair of substrates.

**40**. A liquid crystal display device according to Claim 39, wherein:
a flattening film for flattening the display electrode is provided between said substrate and display electrode.

**41**. A liquid crystal display device according to Claim 40, wherein:
at least one of a pair of display electrodes is structures so that a pixel unit is composed of a plurality of divided electrodes corresponding to said divided section of an alignment layer, and a predetermined gap is provided between each of said divided electrodes.

**42**. A liquid crystal display device according to Claim 33, wherein:
at least one of a pair display electrodes is structured so that a pixel unit is composed of a plurality of divided electrodes corresponding to said divided section of an alignment layer, and a predetermined gap is provided between each of said divided electrodes.

**43**. A liquid crystal display device according to Claim 42, wherein:
a flattening film for flattening the display electrode is provided between said substrate and display electrode.

**44**. A liquid crystal display device according to Claim 33, wherein:
one of said pair of substrates or one of said pair of display electrodes comprises a material for reflecting a light.

**45**. A liquid crystal display device according to Claim 33, wherein:
a pretilt angle θp of a liquid crystal molecule satisfies 80° ≦ θp<90°.

**45**. A liquid crystal display device according to Claim 33, wherein:
at least one retardation plate is provided outside one of said pair of substrates.

**46**. A method of manufacturing a liquid crystal display device comprising:
a pair of substrates with a display electrode inside each of them;
a liquid crystal alignment layer on an inside of at least one of said pair of substrates;
a liquid crystal layer including a liquid crystal with a negative dielectric anisotropy disposed in a gap between said pair of substrates; and
a polarizer disposed outside said pair of substrates;
wherein:
a liquid crystal molecule of said liquid crystal layer is aligned approximately vertically to the substrate under no application of a voltage;
said method comprising the steps of:
forming the display electrode on each of said substrates;
forming a monomolecular film (a thin film in a monolayer) by chemisorbing a chemical adsorbate comprising a compound having a functional group with a repellency and a compound having a photosensitive group on each of said display electrodes;
aligning a molecule composing the thin film in a certain direction provisionally by drain-drying the nonaqueous organic solvent in a certain direction after infiltrating a nonaqueous organic solvent into said thin film;
forming the substrate with the alignment layer, in which an inclined direction of the molecule composing the thin film is different in each of a plurality of patterned divided sections of the alignment layer into which a pixel area is divided, by irradiating a patterned energy beam on the provisionally aligned thin film in the step of aligning provisionally, aligning the molecule composing the thin film again, crosslinking the molecule composing the thin film to each other, and fixing said alignment state at the second time;
constructing the substrate by opposing said pair of substrates with the alignment layer so that the divided section of each alignment layer corresponds to its counterpart, and sticking the substrates with a predetermined gap between the alignment layers; and
injecting a liquid crystal material including a liquid crystal with a negative dielectric anisotropy into said gap to form the liquid crystal layer.

**47**. A method of manufacturing a liquid crystal display device according to Claim 46, wherein:
said compound having a functional group with a repellency is a compound having a fluorocarbon group as an end group.

**48**. A method of manufacturing a liquid crystal display device according to Claim 47, wherein:
said compound having a fluorocarbon group as an end group has further a linear carbon chain and/or a linear siloxane combined chain, and a functional group including a silicon atom.

**49**. A method of manufacturing a liquid crystal display device according to Claim 46, wherein:
said compound having a photosensitive group has further a linear carbon chain and/or a linear siloxane combined chain, and a functional group including a silicon atom.

**50**. A method of manufacturing a liquid crystal display device according to Claim 49, wherein:
said compound having a functional group with a repellency is a compound having a fluorocarbon group as an end group.

**51**. A method of manufacturing a liquid crystal display device according to Claim 50, wherein:
said compound having a fluorocarbon group as an end group has further a linear carbon chain and/or a linear siloxane combined chain, and a functional group including a silicon atom.

**52**. A method of manufacturing a liquid crystal display device according to Claim 46, wherein:
said step of forming a substrate with an alignment layer is the step of changing an inclination and/or an alignment direction of a molecule composing the thin film to a substrate plane in each of a plurality of patterned divided sections of an alignment layer, into which an area on a thin film corresponding to a pixel is divided, by irradiating a polarized light two or more times, with a different polarized direction and a different irradiation area in each irradiation, on a provisionally aligned thin film plane in said step of aligning provisionally.

**53**. A method of manufacturing a liquid crystal display device according to Claim 46, wherein:
said step of forming a substrate with an alignment layer is:
the step of repeating two or more times a series of steps comprising:
a first alignment step of aligning a molecule composing the thin film in a certain direction provisionally by drain-drying in a certain direction after infiltrating a nonaqueous organic solvent into a thin film in a monolayer, and
a second alignment step of irradiating a polarized light having a polarized direction approximately parallel with a provisional alignment direction in said first alignment step; and
the step of changing an inclination and/or an alignment direction of a major axis of the molecule composing the thin film to a substrate plane in each of a plurality of patterned divided sections of an alignment layer, into which an area on the thin film corresponding to a pixel is divided, by making a drain-drying direction at an N-th time (N is an integer of 2 or more) differ from a drain-drying direction at a first time through an [N ― 1]-th time as well as making an irradiation area on a substrate in an irradiation of a polarized light at an N-th time subsequent to a drain-drying at an N-th time differ from an irradiation area at a first time through an [N―1]-th time.

**54**. A method of manufacturing a liquid crystal display device according to Claim 46, wherein:
said manufacturing method comprises further the step of providing a switching element for controlling a voltage applied to a display electrode for one of said pair of substrates.

**55**. A method of manufacturing a liquid crystal display device according to Claim 54, wherein:
said manufacturing method comprises further the step of providing a flattening film for flattening the display electrode between said substrate and display electrode.

**56**. A method of manufacturing a liquid crystal display device according to Claim 46, wherein:
said manufacturing method comprises further the step of forming a plurality of divided electrodes corresponding to said divided section of an alignment layer by providing a groove with a predetermined gap for at least one of said pair of display electrodes.

**57**. A method of manufacturing a liquid crystal display device according to Claim 46, wherein:
one of said pair of substrates or one of said pair of display electrodes comprises a material for reflecting a light.
